(19) Europäisches Patentamt
European Patent Office
Office européen des brevets

(11) Veröffentlichungsnummer: **0 099 859**
**B1**

# (12) EUROPÄISCHE PATENTSCHRIFT

(45) Veröffentlichungstag der Patentschrift: **01.04.87**

(51) Int. Cl.⁴: **D 06 P 3/06,** C 09 B 1/34 // D06P3/86

(21) Anmeldenummer: **83810321.6**

(22) Anmeldetag: **15.07.83**

(54) **Verfahren zum Färben von differential-dyeing-Fasern.**

(30) Priorität: **21.07.82 CH 4450/82**

(43) Veröffentlichungstag der Anmeldung:
**01.02.84 Patentblatt 84/5**

(45) Bekanntmachung des Hinweises auf die Patenterteilung:
**01.04.87 Patentblatt 87/14**

(84) Benannte Vertragsstaaten:
**AT BE CH DE FR GB IT LI NL**

(56) Entgegenhaltungen:
**CH - A - 351 053**
**CH - A - 393 598**
**CH - A - 395 397**
**DE - A - 2 002 595**
**DE - A - 2 814 205**
**FR - A - 1 372 343**
**FR - A - 1 522 594**
**FR - A - 2 288 128**
**FR - A - 2 358 445**
**FR - A - 2 386 635**
**US - A - 2 713 059**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Klybeckstrasse 141, CH-4002 Basel (CH)**

(72) Erfinder: **Schütz, Hans Ulrich, Hans Huber Strasse 23, CH-4053 Basel (CH)**
Erfinder: **Raisin, Helmut, Im Baumgarten 9, CH-4125 Riehen (CH)**
Erfinder: **Bouwknegt, Thys, Beckenrüttiackerweg 2, CH-4153 Reinach (CH)**

**EP 0 099 859 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft ein neues Verfahren zum Färben von differential-dyeing-Fasern aus Polyamidfasermaterial und polyamidfaserhaltigen Materialien mit disulfogruppenhaltigen Anthrachinonfarbstoffen oder Farbstoffmischungen, die einen Disulfoanthrachinonfarbstoff enthalten.

Unter differential dyeing ist das Färben von Stückware aus Fasern gleichen chemischen Ursprungs, aber mit unterschiedlicher Farbstoffaffinität zu verstehen, wodurch z.B. mehrfarbige Artikel aus einem einzigen Färbebad erhalten werden.

Das Färben von Polyamidfasern und polyamidfaserhaltigen Materialien zur Erzielung eines Mehrfarben- oder Hell-Dunkel-Effektes ist nach den üblichen Färbe- oder Druckmethoden möglich, wie beispielsweise das Drucken mit Druckpasten unterschiedlicher Farbstoffkonzentration, jedoch sind diese Verfahren recht aufwendig.

Aufgabe der vorliegenden Erfindung war es, die üblichen Färbe- und Druckverfahren hinsichtlich des Mehrfarbeneffektes und des Hell-Dunkel-Effektes zur Erzielung kontrastreicher Farbmuster zu vereinfachen und für das differential dyeing von Polyamidfasern geeignete Farbstoffe zur Verfügung zu stellen. Voraussetzung des neuen Färbeverfahrens ist, dass zur Erzielung des Mehrfarben- oder des Hell-Dunkel-Effektes Polyamidfasern oder polyamidfaserhaltige Materialien aus Mischungen unterschiedlicher Polyamidfasertypen, die sich durch die Endaminogruppenzahl unterscheiden und die somit unterschiedlich tief mit Säurefarbstoffen anfärbbar sind, verwendet werden.

Nachteil vieler bekannter zur Verfügung stehender Farbstoffe ist, dass beispielsweise Begleitfasern angeschmutzt werden, die Farbstoffe empfindlich auf Änderungen des pH-Wertes im Färbebad reagieren oder zur Erzielung eines gleichmässigen Aufbaues lange Verweilzeiten im siedenden Färbebad benötigt werden.

Es wurde nun gefunden, dass das unten beschriebene Verfahren diese Nachteile nicht aufweist. Mit dem neuen Verfahren wird besonders ein gleichmässiges Ausziehen in einem gegenüber bekannten Verfahren grösseren pH-Bereich auch beim Färben unter dem Kochpunkt erreicht.

Gegenstand der vorliegenden Erfindung ist somit ein Verfahren zum unterschiedlichen Einfärben von Polyamidfasern und polyamidfaserhaltigen Materialien aus unterschiedlich einfärbbaren Komponenten oder Gemischen von Polyamidfasern (differential-dyeing-Polyamidfasern) mit Farbstoffen oder Farbstoffmischungen, welches dadurch gekennzeichnet ist, dass man zum Färben dieser Materialien eine wässrige Flotte verwendet, welche einen Farbstoff der Formel

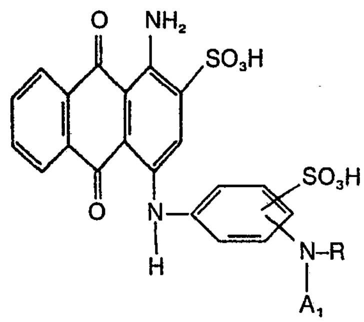

(1),

worin $A_1$ Wasserstoff oder $C_{1-4}$-Alkyl ist und R einen $C_{2-5}$-Alkenoyl-, $C_{3-6}$-Alkenoyl-, Phenoxycarbonyl-, $C_{1-4}$-Alkylsulfonyl- oder Phenylsulfonylrest bedeutet, der im Alkyl-, Alkenyl-, Phenoxy- oder Phenylteil substituiert sein kann, oder eine Mischung eines Farbstoffs der Formel (1) zusammen mit einem monosulfogruppenhaltigen Anthrachinonfarbstoff enthält.

Als Alkylrest kommt für $A_1$ in Formel (1) ein geradkettiger oder verzweigter Alkylrest in Betracht, wie z.B. der Methyl-, Äthyl-, Propyl-, Isopropyl-, Butyl-, sec.-Butyl-, Isobutyl- und tert.-Butylrest.

Als $C_{2-5}$-Alkanoylrest kommt für R ein geradkettiger oder verzweigter Rest in Betracht, der auch substituiert sein kann, z.B. durch Halogen, wie Fluor, Chlor und Brom. Als Beispiele seien genannt: Acetyl, Chloracetyl, Propionyl, Butyryl, β-Chlorpropionyl, β-Brompropionyl und α,β-Dibrompropionyl.

Als $C_{3-6}$-Alkenoylrest kommt für R beispielsweise der Acryloyl-, 2- oder 3-Butenoyl-, 2-, 3- oder 4-Pentenoyl- und der 4-Methyl-2-pentenoylrest in Betracht, der auch substituiert sein kann, z.B. durch Halogen, wie Fluor, Chlor und Brom. Als Beispiel seien der β-Chloracryloylrest und der α-Bromacryloylrest genannt.

Für R als Phenoxycarbonylrest kommt ein im Phenylring unsubstituierter oder beispielsweise durch Halogen, wie Fluor, Chlor und Brom, $C_{1-4}$-Alkyl, wie Methyl, Äthyl, Propyl, Isopropyl, Butyl und Isobutyl, und $C_{1-4}$-Alkoxy, wie Methoxy, Äthoxy, Propoxy, Isopropoxy, Butoxy und tert.-Butoxy, substituierter Rest in Betracht.

Für R als $C_{1-4}$-Alkylsulfonylrest kommt beispielsweise der Methyl-, Äthyl, Propyl-, Isopropyl-, Butyl- und sec.-Butylsulfonylrest in Betracht.

Für R als Phenylsulfonylrest kommt ein im Phenylring unsubstituierter oder beispielsweise durch Halogen, wie Fluor, Chlor und Brom, $C_{1-4}$-Alkyl, wie Methyl, Äthyl, Propyl, Isopropyl, Butyl und tert.-Butyl, und $C_{1-4}$-Alkoxy, wie Methoxy, Äthoxy, Propoxy, Isopropoxy, Butoxy und tert.-Butoxy, substituierter Rest in Betracht.

Wichtige Verfahrensvarianten sind dadurch gekennzeichnet, dass man

a) einen Farbstoff der Formel (1) verwendet, worin R Acetyl, Chloracetyl, Propionyl, β-Chlor- oder β-Brompropionyl, Acryloyl, Phenoxycarbonyl, Methylsulfonyl, Phenylsulfonyl oder Methylphenylsulfonyl ist.

b) eine Mischung eines Farbstoffs der Formel (1) zusammen mit einem Farbstoff der Formel

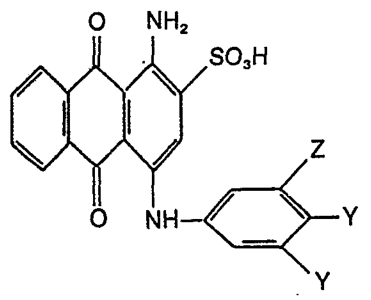

(2),

worin ein Y Wasserstoff oder Methyl und das andere Y $C_{2-4}$-Alkanoylamino oder $C_{2-4}$-Hydroxyalkylsulfamoyl und Z Wasserstoff oder Methyl ist, verwendet, wobei das Verhältnis der Farbstoffe der Formeln (1) und (2) vorzugsweise 99:1 bis 70:30 und insbesondere 90:10 bis 80:20 ist.

c) einen Farbstoff der Formel

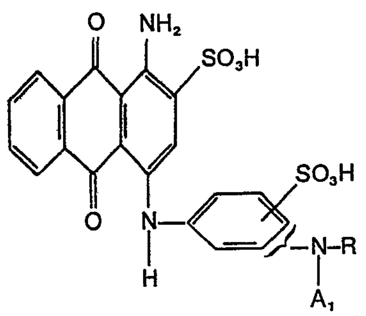

(3),

worin $A_1$ Wasserstoff, Methyl oder Äthyl ist und R die oben unter a) angegebene Bedeutung hat, verwendet.

Die bevorzugten Verfahrensvarianten sind dadurch gekennzeichnet, dass man

d) einen Farbstoff der Formel

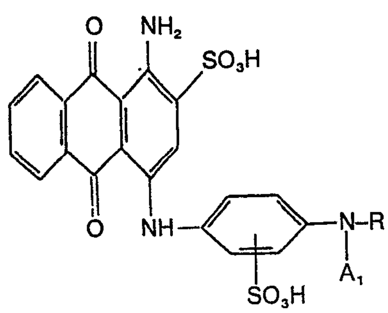

(4),

worin $A_1$ Wasserstoff oder Methyl ist und R die oben unter a) angegebene Bedeutung hat, verwendet. Vorzugsweise ist R in Formel (4) Acetyl, Chloracetyl, Propionyl, β-Chlor- oder β-Brompropionyl, Acryloyl, Methylsulfonyl, Phenylsulfonyl oder p-Methylphenylsulfonyl. Insbesondere werden Farbstoffe der Formel (4) verwendet, worin $A_1$ Wasserstoff und R Phenylsulfonyl oder p-Methylphenylsulfonyl bedeutet.

e) eine Mischung der Farbstoffe der Formeln

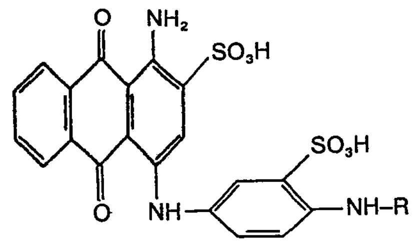

(5)

und

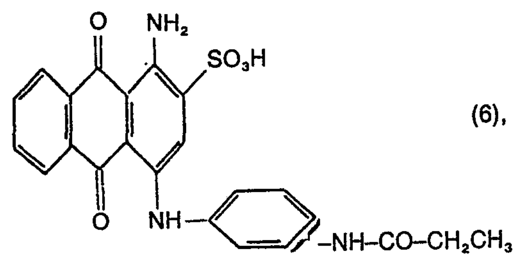

(6),

worin R in Formel (5) Acetyl, p-Methylphenylsulfonyl oder Phenylsulfonyl ist, verwendet.

Ebenfalls bevorzugte Verfahrensvarianten sind dadurch gekennzeichnet, dass man

f) einen Farbstoff der Formel (1), worin $A_1$ Wasserstoff ist, verwendet.

g) Einen Farbstoff der Formel (1), worin R einen $C_{1-4}$-Alkylsulfonyl- oder Phenylsulfonylrest bedeutet, der im Phenylteil substituiert sein kann, verwendet.

Eine ebenfalls bevorzugte Verfahrensvariante ist dadurch gekennzeichnet, dass man einen Farbstoff der Formel (1) oder eine Mischung eines Farbstoffs der Formel (1) mit einem monosulfogruppenhaltigen Anthrachinonfarbstoff, wie z.B. einem Farbstoff der Formel (2) zusammen mit für reguläre Polyamidfasern geeigneten Säurefarbstoffen verwendet.

Als für reguläre Polyamidfasern geeignete Säurefarbstoffe kommen zahlreiche bekannte Säurefarbstoffe, insbesondere monosulfongruppenhaltige Farbstoffe in Betracht. Insbesondere verwendet man mindestens einen gelben bzw. orangen Farbstoff und/oder mindestens einen roten Farbstoff. Als gelben oder orangen Farbstoff verwendet man vorzugsweise mindestens einen Farbstoff der Formel

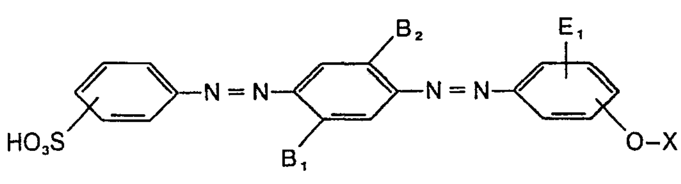

(7),

worin $B_1$, $B_2$ und $E_1$ Wasserstoff, $C_{1-4}$-Alkyl oder $C_{1-4}$-Alkoxy und X geradkettiges oder verzweigtes $C_{1-4}$-Alkyl oder geradkettiges oder verzweigtes $C_{2-4}$-Hydroxyalkyl bedeuten.

Als roten Farbstoff verwendet man vorzugsweise mindestens einen Farbstoff der Formel

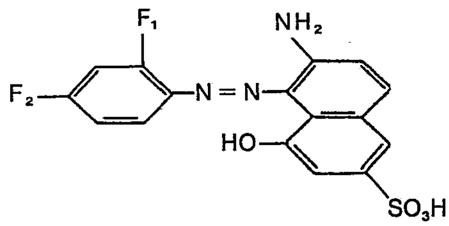 (8),

worin $F_1$ Wasserstoff, gegebenenfalls substituiertes $C_{1-4}$-Alkyl,

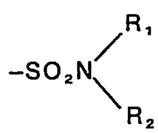 , 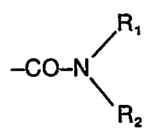

oder $-SO_2R_3$ ist, wobei $R_1$ $C_{1-4}$-Alkyl, $R_2$ gegebenenfalls substituiertes $C_{5-7}$-Cycloalkyl oder gegebenenfalls substituiertes Phenyl, und $R_3$ gegebenenfalls substituiertes Phenyl oder gegebenenfalls substituiertes Phenoxy ist, und $F_2$ Wasserstoff, Halogen, $C_{2-4}$-Alkanoylamino, $C_{5-8}$-Cycloalkoxycarbonylamino, $C_{1-4}$-Alkoxycarbonylamino, $C_{1-4}$-Alkylsulfonylamino oder gegebenenfalls substituiertes Phenylsulfonylamino bedeutet.

Als Alkylreste kommen für $B_1$, $B_2$, $E_1$, $F_1$, $R_1$ und X in den Formeln (7) und (8) unabhängig voneinander geradkettige oder verzweigte Alkylreste in Betracht, wie beispielsweise Methyl, Äthyl, Propyl, Isopropyl, Butyl, sek.-Butyl, Isobutyl und tert.-Butyl.

Der Rest $F_1$ als Alkylrest kann substituiert sein, z.B. durch Halogen, wie Chlor oder Brom und insbesondere Fluor, vorzugsweise ist $F_1$ als Alkylrest ein $C_{1-4}$-Perfluoralkylrest, insbesondere der Trifluormethylrest.

Als $C_{5-7}$-Cycloalkylrest kommen für $R_2$ beispielsweise der Cyclohexylrest oder ein durch Alkyl, wie Methyl, substituierter Cyclohexylrest in Betracht.

Als gegebenenfalls substituierter Phenylrest kommt für $R_2$ und $R_3$ ein durch $C_{1-4}$-Alkyl, $C_{1-4}$-Alkoxy oder Halogen substituierter Phenylrest in Betracht; vorzugsweise ist $R_2$ oder $R_3$ ein unsubstituierter Phenylrest.

Als gegebenenfalls substituierter Phenoxyrest kommt für $R_3$ ein durch $C_{1-4}$-Alkyl, insbesondere Methyl, $C_{1-4}$-Alkoxy oder Halogen, insbesondere Chlor, substituierter Phenoxyrest in Betracht; vorzugsweise ist $R_3$ als Phenoxyrest ein unsubstituierter oder durch Chlor substituierter Phenoxyrest.

Als Halogen kommt für $F_2$ in Formel (8) Fluor oder Brom und insbesondere Chlor in Betracht.

Als $C_{2-4}$-Alkanoylamino kommt für $F_2$ in Formel (8) beispielsweise der Acetylamino-, Propionylamino- oder Butyrylaminorest in Betracht.

Als $C_{5-8}$-Cycloalkoxycarbonylamino kommt für $F_2$ insbesondere der Cyclohexyloxycarbonylaminorest in Betracht.

Als $C_{1-4}$-Alkylsulfonylamino kommt für $F_2$ der Methyl-, Äthyl-, Propyl-, Isopropyl-, Butyl-, tert.-Butyl-, Isobutyl- oder sek.-Butylsulfonylaminorest in Betracht.

Als Phenylsulfonylaminorest kommt für $F_2$ ein durch $C_{1-4}$-Alkyl, $C_{1-4}$-Alkoxy oder Halogen substituierter Phenylsulfonylaminorest in Betracht; vorzugsweise ein unsubstituierter oder durch Methyl substituierter Phenylsulfonylaminorest.

Als Alkoxyreste kommen für $B_1$, $B_2$ und $E_1$ in Formel (7) beispielsweise der Methoxy-, Äthoxy-, Propoxy-, Isopropoxy-, Butoxy-, sek.-Butoxy-, Isobutoxy- oder tert.-Butoxyrest in Betracht.

Als Hydroxylalkylrest kommt für X in Formel (7) ein geradkettiger oder verzweigter Hydroxyalkylrest in Betracht, wie beispielsweise der β-Hydroxyäthyl-, β-Hydroxypropyl-, β-Hydroxybutyl- oder der α-Äthyl-β-hydroxyäthylrest.

Insbesondere verwendet man mindestens einen roten Farbstoff der Formel (8), worin $F_1$ Trifluormethyl, N-Methyl-N-cyclohexylsulfamoyl oder N-Äthyl-N-phenylsulfamoyl und $F_2$ Wasserstoff, Chlor oder Acetylamino ist.

Die in dem erfindungsgemässen Verfahren verwendeten oben erwähnten Farbstoffe oder Farbstoffmischungen der Formeln (1), (2), (7) und (8) repräsentieren die drei primären Farben blau, gelb bzw. orange und rot und können miteinander vermischt jede gewünschte Nuance des sichtbaren Farbspektrums durch geeignete Wahl der Mengenverhältnisse dieser Farbstoffe erzeugen, wobei die Musterung bzw. der Mehrfarbeneffekt durch Art und Menge der verwendeten unterschiedlich anfärbbaren Polyamidfasern bestimmt wird.

Insbesondere verwendet man zum Trichromie-Färben einen Farbstoff der Formel (1) oder eine Mischung der Farbstoffe der Formeln (1) und (2) zusammen mit mindestens einem Farbstoff der Formel (7) und mindestens einem Farbstoff (8), worin $F_1$ und $F_2$ die oben angegebenen bevorzugten Bedeutungen haben.

Insbesondere verwendet man als Farbstoff der Formel (7) den Farbstoff der Formel

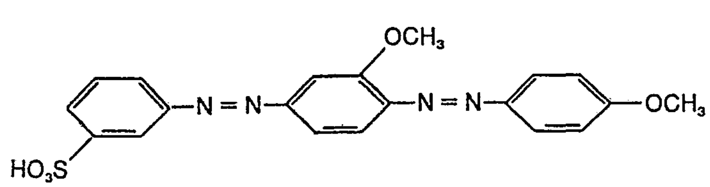 (9)

und als Farbstoff der Formel (8) den Farbstoff der Formel

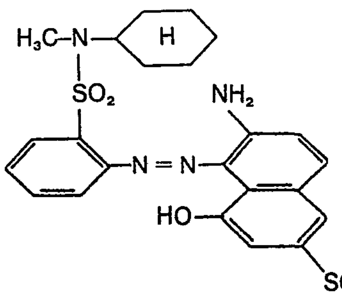

(10),

insbesondere zusammen mit dem Farbstoff der Formel (4), worin $A_1$ Wasserstoff oder Methyl und R Acetyl, Chloracetyl, Propionyl, β-Chlor- oder β-Brompropionyl, Acryloyl, Phenylsulfonyl, Methylsulfonyl oder p-Methylphenylsulfonyl bedeutet oder zusammen mit einem Gemisch der Farbstoffe der Formeln (4) und (6), worin in Formel (4) $A_1$ Wasserstoff und R Acetyl oder Phenylsulfonyl bedeutet.

Die in dem erfindungsgemässen Verfahren zum Färben verwendeten Farbstoffe sind teilweise bekannt. Die neuen Farbstoffe der Formel

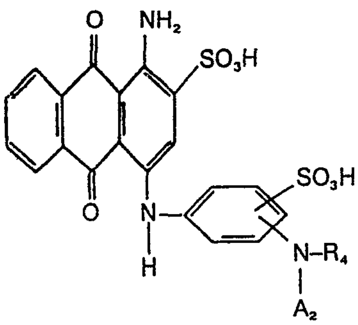

(11),

worin $A_2$ Wasserstoff oder $C_{1-4}$-Alkyl und $R_4$ eine $C_{1-4}$-Alkylsulfonyl- oder Phenylsulfonylrest bedeutet, der im Phenylteil durch $C_{1-4}$-Alkyl substituiert sein kann, stellen einen weiteren Gegenstand der Erfindung dar. Bevorzugt sind die Farbstoffe der Formel (11), worin

a) $A_2$ Wasserstoff ist;
b) $R_4$ Phenylsulfonyl oder Methylphenylsulfonyl ist;
c) der $-N(A_2)R_4$-Rest in m- und insbesondere in p-Stellung zur N–H Gruppe des Phenylaminorestes gebunden ist.

Insbesondere bevorzugt sind die Farbstoffe der Formeln

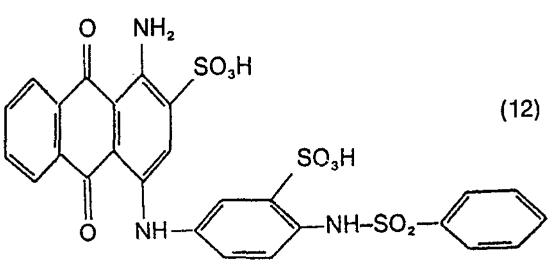

(12)

und

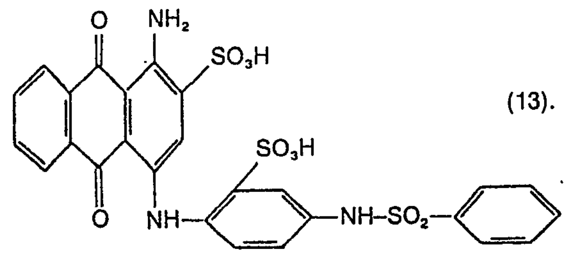

(13).

Die Farbstoffe der Formeln (1) und (11) werden hergestellt, indem man eine Verbindung der Formel

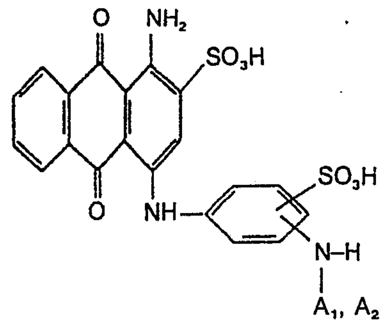

(14),

worin $A_1$ oder $A_2$ die angegebene Bedeutung haben, mit einer den Rest R oder $R_4$ einführenden Verbindung acyliert.

Insbesondere verwendet man eine Verbindung der Formel (14), worin $A_2$ Wasserstoff ist; und als Acylierungsmittel eine Verbindung, welche den Phenylsulfonyl- oder Methylphenylsulfonylrest $R_4$ einführt.

Die besonders bevorzugten Farbstoffe der Formeln (12) und (13) werden hergestellt, indem man 1-Amino-4-(3′- oder 2′-sulfo-4′-aminophenylamino)-anthrachinon-2-sulfonsäure mit Phenylsulfonylchlorid umsetzt.

Als Beispiele für den Rest R oder $R_4$ einführende Verbindungen seien genannt: Acetylchlorid, Chloracetylchlorid, Essigsäureanhydrid, Propionsäureanhydrid, Propionsäurechlorid, Butancarbonsäurechlorid, Acrylsäurechlorid, Methansulfonsäurechlorid, Benzolsulfonsäurechlorid, p-Methylbenzolsulfonsäurechlorid, β-Chlor- oder β-Brompropionsäurechlorid.

Die Acylierung erfolgt vorzugsweise in wässriger Lösung oder Suspension bei schwach alkalischem bis neutralem pH-Wert.

Die Farbstoffe der Formel (2) können beispielsweise gemäss den Angaben der US-A-3 778 453, 1 927 125 und 4 146 363, die Farbstoffe der Formel (8) gemäss den Angaben der DE-C-702 932 und 2 063 907 und der DE-A-2 712 170 und die Farbstoffe der Formel (7) gemäss den Angaben der DE-A-2 142 412 hergestellt werden.

Werden in dem erfindungsgemässen Verfahren Farbstoffmischungen verwendet, so können diese durch Mischung der Einzelfarbstoffe hergestellt werden. Dieser Mischprozess erfolgt beispielsweise in geeigneten Mühlen, z.B. Kugel- und Stiftmühlen, sowei in Knetern oder Mixern. Ferner können die Farbstoffmischungen der Farbstoffe durch Zerstäubungstrocknen der wässrigen Farbstoffmischungen hergestellt werden.

Die in dem erfindungsgemässen Verfahren verwendeten Farbstoffe liegen entweder in der Form ihrer freien Sulfonsäure oder vorzugsweise als deren Salze vor.

Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Triäthanolamins genannt.

Die in dem erfindungsgemässen Verfahren verwendeten Farbstoffe enthalten in der Regel weitere Zusätze wie z.B. Kochsalz oder Dextrin.

Das erfindungsgemässe Verfahren zum Färben kann auf die üblichen Färbeverfahren angewendet werden. Die Färbeflotten können ausser Wasser und den Farbstoffen weitere Zusätze, beispielsweise Netzmittel, Antischaummittel, Egalisiermittel oder die Eigenschaft des Textilmaterials beeinflussende Mittel wie z.B. Weichmachungsmittel, Zusätze zum Flammfestausrüsten oder schmutz-, wasser- und öl-abweisende Mittel sowie wasserenthärtende Mittel und natürliche oder synthetische Verdicker, wie z.B. Alginate und Celluloseäther, enthalten.

Das erfindungsgemässe Verfahren ist besonders zum Färben aus Kurzflotten, wie z.B. bei Kontinuefärbeverfahren oder diskontinuierlichen und kontinuierlichen Schaumfärbeverfahren, geeignet.

Die Färbetemperatur beträgt in der Regel 50 bis 100 °C, vorzugsweise 70 bis 96 °C, wobei bereits bei 70 °C befriedigende Resultate erzielt werden.

Bei den für das erfindungsgemässe Verfahren verwendbaren Polyamidfasern und polyamidfaserhaltigen Materialien kommen vorzugsweise synthetische Polyamidfasern beispielsweise in Form von Geweben oder Gewirken und insbesondere Teppichmaterialien aus unterschiedlich tief einfärbbaren Fasertypen aus Polyamid-(6)-, Polyamid-(66)- und Polyamid-(11)-fasern in Betracht, die sich durch die Anzahl der Aminoendgruppen unterscheiden. Bei diesen für das differentialdyeing geeigneten Polyamidfasern unterscheidet man zwischen den als mit Säurefarbstoffen nicht-, leicht-, normal- und tief-anfärbbar bezeichneten Fasertypen.

Ferner kommen auch Fasergemische der oben erwähnten Polyamidfasertypen zusammen mit anderen natürlichen und/oder synthetischen Fasermaterialien, wie z.B. Polyester-, Polyacrylnitril- und Cellulosefasern, in Betracht.

Die in dem erfindungsgemässen Verfahren eingesetzten Farbstoffe der Formel (1) ergeben auf den unterschiedlich einfärbbaren Polyamidfasertypen auffallende Farbkontraste in blauen Nuancen zwischen den verschiedenen Fasertypen. Ferner kann die Kontrastwirkung variiert werden, z.B. durch Verwendung von Farbstoffgemischen der Farbstoffe der Formeln (1) und (2). Ausserdem können in dem erfindungsgemässen Verfahren Farbstoffe der Formel (1) oder Farbstoffmischungen der Farbstoffe der Formeln (1) und (2) gleichzeitig mit Farbstoffen anderer Typen, wie dispersen, basischen oder neutral färbenden sauren Farbstoffen, wie z.B. den Farbstoffen der oben angegebenen Formeln (7) und (8), zur Erzielung modischer Mehrfarbeneffekte verwendet werden.

Der in dem erfindungsgemässen Verfahren verwendete Farbstoff der Formel (1) zeigt bei sehr guter Differenzierung der Farbtiefe auf den oben beschriebenen verschiedenen Polyamidfasertypen ein ausgezeichnetes Aufbauvermögen, insbesondere bereits bei tiefen Färbetemperaturen und in einem weiten pH-Bereich, und er ist mit anderen Farbstoffen, ohne dass eine Blockierung auftritt, kombinierbar.

Aus der FR-A-2 288 128 und der CH-A-393 598 sind strukturell ähnliche Anthrachinonfarbstoffe bekannt, jedoch lässt deren Migrationsverhalten bzw. deren Aufziehverhalten beim Färben von Polyamidmaterial zu wünschen übrig.

In den folgenden Beispielen stehen Teile für Gewichtsteile. Die Temperaturen sind in Celsiusgraden angegeben. Die Beziehung zwischen Gewichtsteilen und Volumenteilen ist dieselbe wie diejenige zwischen Gramm und Kubikzentimeter.

In den folgenden Beispielen werden als tiefanfärbbare Polyamidfaser beispielsweise die Faser der Firma duPont mit der Bezeichnung Nylon 66-Type 847, als normal anfärbbare Polyamidfaser beispielsweise die Faser der Firma duPont mit der Bezeichnung Nylon 66-Type 846 und als leichtanfärbbare Polyamidfaser beispielsweise die Faser der Firma duPont mit der Bezeichnung Nylon 66-Type 845 eingesetzt.

Beispiel 1:

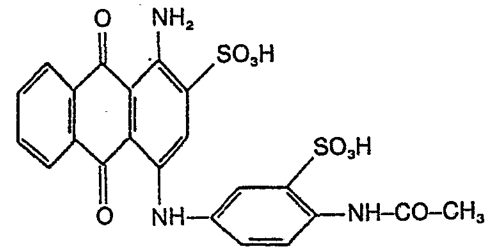

48,9 Teile 1-Amino-4-(4'-aminophenylamino-3'-sulfonsäure)-anthrachinon-2-sulfonsäure werden in

175 Teilen heissem Wasser mit Natriumhydroxydlösung bei pH 8–8,5 gelöst und bei ca. 45° mit

12,8 Teilen Essigsäureanhydrid versetzt und ca. 30 Minuten kräftig gerührt. Der Farbstoff ist vollständig acetyliert und gelöst. Durch Kochsalzzugabe wird der Farbstoff gefällt, abgesaugt und getrocknet. Man erhält

65 Teile Farbstoffpulver, das sich in Wasser mit blauer Farbe löst. Der Farbstoff hat die oben angegebene Konstitution. Polyamidmaterialien und Wolle werden in blauen Tönen mit guten Allgemeinechtheiten gefärbt.

Beispiel 2:

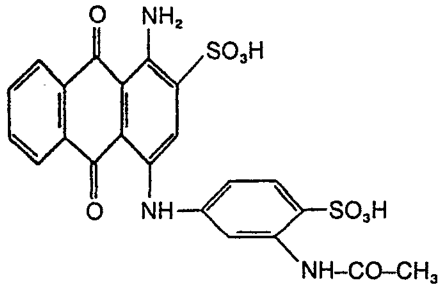

48,9 Teile 1-Amino-4-(3′-aminophenylamino-4′-sulfonsäure)-anthrachinon-2-sulfonsäure werden in
400 Teilen heissem Wasser mit Natriumhydroxydlösung bei pH 7–8 gelöst, bei 50° mit
30 Teilen Essigsäureanhydrid versetzt und ca. 30 Minuten kräftig gerührt. Der Farbstoff ist vollständig acetyliert und gelöst. Durch Zugabe von ca. 20% Kochsalz wird der Farbstoff gefällt, abgesaugt und getrocknet. Man erhält
120 Teile Farbstoffpulver. Der Farbstoff hat die oben angegebene Konstitution und er färbt Polyamidmaterialien und Wolle in blauen Tönen.

Beispiel 3:

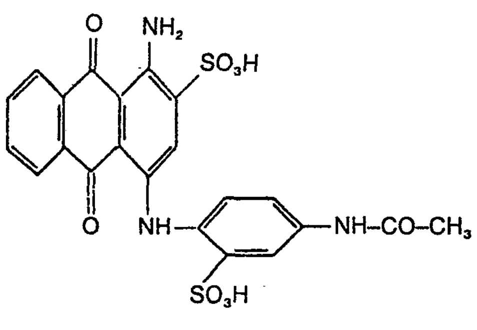

48,9 Teile 1-Amino-4-(4′-aminophenylamino-2′-sulfonsäure)-anthrachinon-2-sulfonsäure werden in
200 Teilen heissem Wasser mit Natriumhydroxydlösung bei pH 7–8 gelöst, bei 45° mit
10,3 Teilen Essigsäureanhydrid versetzt und 30 Minuten kräftig gerührt. Der Farbstoff ist teilweise ausgefallen und vollständig acetyliert. Durch Zusatz von 5% Kochsalz wird der Farbstoff vollständig gefällt, abgesaugt und getrocknet. Man erhält
53,5 Teile Farbstoffpulver. Der Farbstoff hat die oben angegebene Konstitution und er färbt Polyamidmaterialien und Wolle in blauen Tönen.

Beispiel 4:

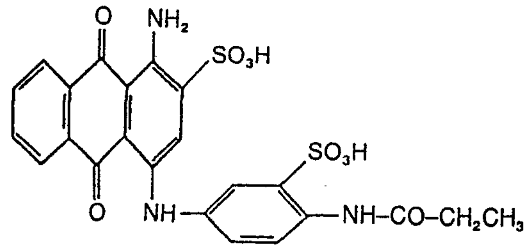

48,9 Teile 1-Amino-4-(4′-aminophenylamino-3′-sulfonsäure)-anthrachinon-2-sulfonsäure werden in
200 Teilen heissem Wasser mit Natriumhydroxydlösung bei pH 7–8 gelöst, bei 50° mit
30 Teilen Propionsäureanhydrid versetzt und 2 Stunden kräftig gerührt. Der Farbstoff ist vollständig acyliert und gelöst. Anschliessend wird mit Natriumhydroxydlösung neutralisiert, der Farbstoff mit 17,5% Kochsalz gefällt, abgesaugt und getrocknet. Man erhält
68 Teile Farbstoffpulver. Der Farbstoff hat die oben angegebene Konstitution und er färbt Polyamidmaterialien und Wolle in blauen Tönen.

Beispiel 5:

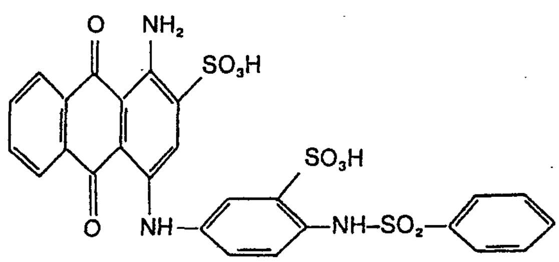

48,9 Teile 1-Amino-4-(4′-aminophenylamino-3′-sulfonsäure)-anthrachinon-2-sulfonsäure werden in
200 Teilen heissem Wasesr mit Natriumhydroxydlösung bei pH 7–8 gelöst, bei 40° mit
35 Teilen Benzolsulfochlorid versetzt, einige Stunden kräftig gerührt, wobei durch Zutropfen von verdünnter Natriumhydroxydlösung der pH-Wert bei 7–8 gehalten wird. Der Farbstoff ist vollständig benzolsulfonyliert und praktisch völlig ausgefallen. Nach Absaugen und Trocknen erhält man
80 Teile Farbstoffpulver. Der Farbstoff hat die oben angegebene Konstitution und er färbt Polyamidmaterialien und Wolle in blauen Tönen.

Weitere Farbstoffe mit ähnlichen Eigenschaften erhält man in analoger Weise durch Acylierung der in der folgenden Tabelle 1 in Kolonne I angegebenen Basisfarbstoffe mit den in Kolonne II aufgeführten Acylierungsmitteln. Diese färben Polyamid und Wolle in den in Kolonne III angegebenen Nuancen.

Tabelle 1

| Bsp. | I | II | III |
|---|---|---|---|
| 6 | 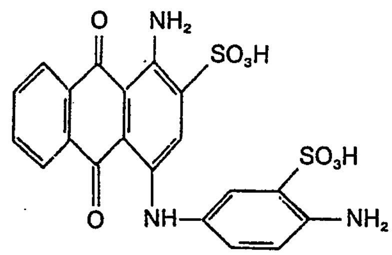 | $CH_3-SO_2Cl$ | blau |
| 7 | 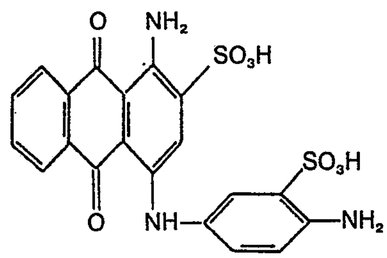 | 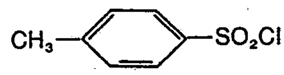 | blau |
| 8 | 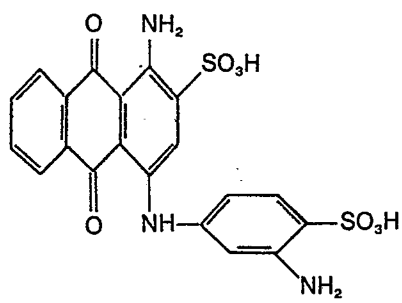 | 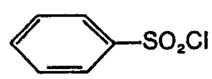 | blau |
| 9 | 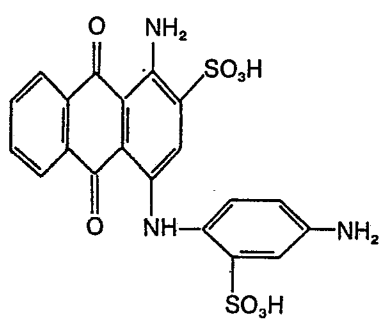 | 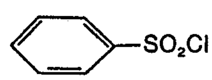 | blau |
| 10 | 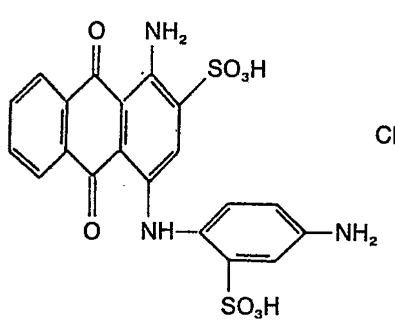 | 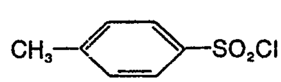 | blau |

Tabelle 1 (Forsetzung)

| Bsp. | I | II | III |
|---|---|---|---|
| 11 | 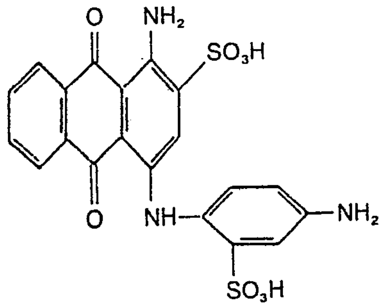 | $CH_2=CH\text{-}COCl$ | blau |
| 12 | 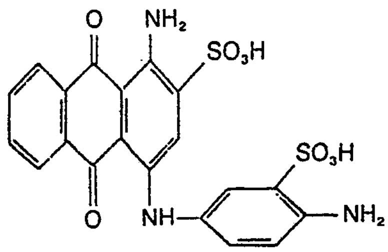 | $ClCH_2\text{-}COCl$ | blau |
| 13 | 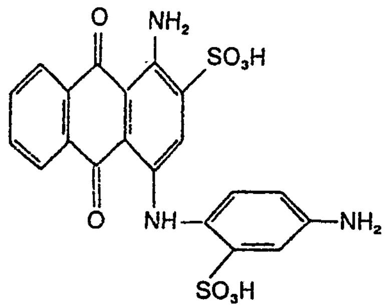 | 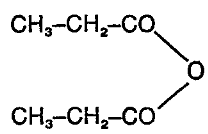 | blau |
| 14 | 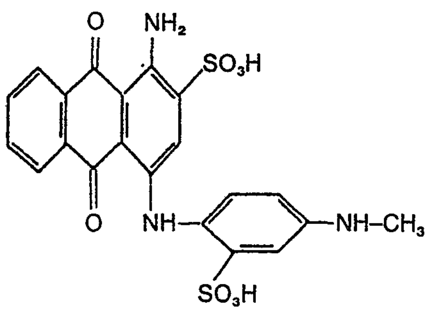 | 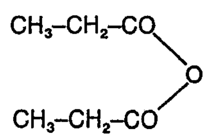 | blau |

Beispiel 15:

Man färbt 10 Teile eines Polyamid-Teppichmaterials aus einer normal-, tief- und einer als mit sauren Farbstoffen leichtanfärbbar bezeichneten Polyamidfasertype in 500 Teilen einer wässrigen Flotte, die 1 g/l Ammonacetat, 1,5% eines nichtionischen Egalisierhilfsmittels auf der Basis eines polyäthoxylierten $C_{20-22}$-Fettamins enthält und mit 80%-iger Essigsäure auf pH 4,5 gestellt wird. Als Farbstoffe werden 0,24% des gelben Farbstoffs der Formel

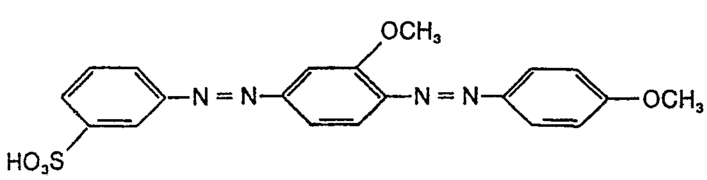

(9)

0,12% des roten Farbstoffs der Formel

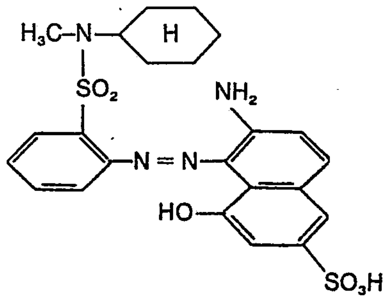

(10),

und 0,15% des blauen Farbstoffs der Formel

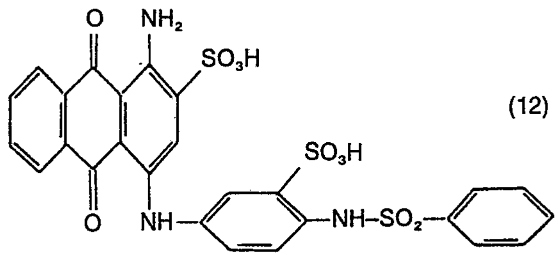

(12)

verwendet, wobei sich die Mengenangaben auf das Fasergewicht beziehen. Die Färbeflotte wird 20 Minuten auf Raumtemperatur gehalten und dann innerhalb von 45 Minuten auf 70° erhitzt. Man färbt 60 Minuten bei 70°. Das gefärbte Polyamid-Teppichmaterial wird anschliessend herausgenommen und wie üblich gespült und getrocknet. Man erhält ein kontrastreiches Muster der Polyamidteppichware, wobei die als leicht anfärbbar bezeichnete Fasertype praktisch farblos, die als normal-anfärbbar bezeichnete Fasertype in orangeroter Nuance und die als tief-anfärbbar bezeichnete Fasertype in brauner Nuance angefärbt ist. Die Färbungen zeigen allgemein gute Echtheiten.

Beispiel 16:

Man färbt 10 Teile eines Polyamid-Teppichmaterials aus einer normal-, tief- und einer als leicht-anfärbbar bezeichneten Fasertype in 500 Teilen einer wässrigen Flotte, die 1,5 g/l Ammonacetat, 1,5% eines in Beispiel 15 näher bezeichneten nichtionischen Egalisierhilfsmittels enthält und mti 80%iger Essigsäure auf pH 5,5 eingestellt wird. Als Farbstoffe werden 0,24% des gelben Farbstoffs der Formel (9), 0,12% des roten Farbstoffs der Formel (10) und 0,15% des blauen Farbstoffs der Formel (12) aus Beispiel 15 verwendet, wobei sich die Mengenangaben auf das Fasergewicht beziehen. Die Färbeflotte wird 10 Minuten bei Raumtemperatur gehalten und dann innerhalb von 45 Minuten auf 96° erhitzt. Man färbt 60 Minuten bei 96°. Anschliessend lässt man die Flotte auf 70° abkühlen, das gefärbte Polyamid-Teppichmaterial wird herausgezogen und wie üblich gespült und getrocknet. Man erhält ein wie in Beispiel 15 näher bezeichnet kontrastreiches Muster der Polyamid-Teppichware.

Beispiel 17:

1000 Teile einer wässrigen Lösung enthaltend 0,48 g/l des gelben Farbstoffs der Formel (9), 0,24 g/l des roten Farbstoffs der Formel (10) und 0,3 g/l des blauen Farbstoffs der Formel (12) aus Beispiel 15 sowie 3 g/l eines Verdickungsmittels auf der Basis von Johannisbrotkernmehl, 1,5 g/l eines Schaummittels bestehend aus 45 Teilen $C_{12}H_{25}O(CH_2-CH_2O)_2-SO_3Na$, 45 Teilen $C_{11}H_{23}CON(CH_2CH_2OH)_2$ und 10 Teilen Isopropanol, 1 g/l Ammonacetat und 0,2 g/l eines wasserenthärtenden Mittels auf der Basis von Polyphosphat werden mit Essigsäure auf einen pH-Wert von 4,5 eingestellt. Von dieser Flotte werden 500%, bezogen auf das Teppichgewicht, auf einen Polyamid-Rohteppich aus einer normal-, tief- und einer als mit sauren Farbstoffen leicht-anfärbbar bezeichneten Polyamidfasertype, der zuvor mit 1 g/l des Umsetzungsproduktes aus 1 Mol Nonylphenol und 9 Mol Äthylenoxid vorgenetzt und dann auf eine Restfeuchte von 100% abgesaugt wurde, aufgetragen. Der getränkte Teppich gelangt in einem Schleifendämpfer, wo er während 5 Minuten mit Sattdampf von 100° behandelt wird.

Nach dem Waschen in einer Breitwaschmaschine erhält man einen Polyamidteppich, dessen als leicht-anfärbbar bezeichnete Fasertype praktisch farblos, die als normal-anfärbbar bezeichnete Fasertype in orangeroter Nuance und die als tief-anfärbbar bezeichnete Fasertype in brauner Nuance angefärbt ist.

Beispiel 18:

Eine Polyamidteppichware bestehend aus einer normal-, tief- und einer als mit sauren Farbstoffen leicht-anfärbbar bezeichneten Polyamidfasertype mit einem Quadratmetergewicht von 535 g werden in einer Flotte, die pro Liter 1 g des Umsetzungsproduktes aus 1 Mol Nonylphenol und 9 Mol Äthylenoxid enthält, kontinuierlich vorgenetzt und dann auf eine Restfeuchte von 100 Gewichtsprozent abgesaugt.

In einer Verschäumungsvorrichtung (Mixer) wird aus folgender wässriger Flotte ein Farbschaum hergestellt, dessen Verschäumungsgrad 1:8 beträgt.

1,2 g/l des gelben Farbstoffs der Formel (9)
0,6 g/l des roten Farbstoffs der Formel (10)
0,75 g/l des blauen Farbstoffs der Formel (12)
1 g/l eines Schaumstabilisatorgemisches aus Kokosfettsäurediäthanolamid/Nonylphenolpolyglykol(11)äther und Lauryltriglykoläthersulfat-Natrium,
1 g/l des Siloxanoxyalkylen-Copolymerisates der Formel

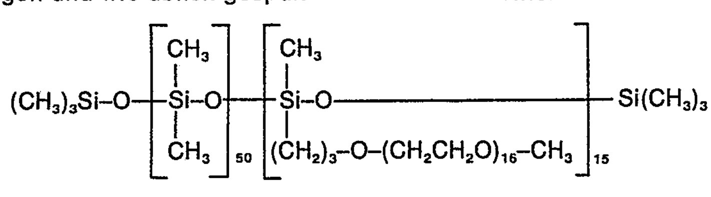

0,5 g/l eines wasserenthärtenden Mittels auf der Basis von Polyphosphat, sowie Essigsäure zur Einstellung der Flotte auf einen pH-Wert von 4,5.

Dieser Schaum wird dann aus einem Schaumbehälter, der eine verstellbare Rakel für die Einstellung der gewünschten Schaumdicke aufweist, über eine Auftragswalze mittels einer Rutsche auf die Polseite des durch die Färbeanlage laufenden Teppichs aufgebracht (Laufgeschwindigkeit 9 m/Minute). Die Schichthöhe des Schaums beträgt 8 mm. Der Farbschaumauftrag beträgt 140 bis 170%.

Über eine Transportwalze läuft der Teppich dann in einen Dämpfer (5 Minuten bei 100°, Sattdampf), wo ein leichtes Aufschäumen und dann ein Zerstören des Schaums erfolgt. Anschliessend wird der Teppich mit Wasser von etwa 80° abgespritzt, dann abgesaugt und bei 100 bis 130° auf einem Siebtrommeltrockner getrocknet.

Das erhaltene Teppichmaterial zeigt ein kontrastreiches Muster, wobei die als leicht anfärbbar bezeichnete Polyamidfasertype praktisch farblos, die als normal-anfärbbar bezeichnete Polyamidfasertype in orangeroter Nuance und die als tief-anfärbbar bezeichnete Fasertype in brauner Nuance angefärbt ist.

Beispiel 19:

Man färbt 10 Teile eines Polyamid-Teppichmaterials aus einer normal-, tief- und einer als leicht-anfärbbar bezeichneten Fasertype in 500 Teilen einer wässrigen Flotte, die 1,5 g/l Ammonacetat, 1,5% eines in Beispiel 15 näher bezeichneten nichtionischen Egalisierhilfsmittels enthält und mit 80%-iger Essigsäure auf pH 5,5 eingestellt wird. Als Farbstoffe werden 0,24% des gelben Farbstoffs der Formel (9) und 0,2% des blauen Farbstoffs der Formel (12) aus Beispiel 15 verwendet, wobei sich die Mengenangaben auf das Fasergewicht beziehen. Die Färbeflotte wird 10 Minuten bei Raumtemperatur gehalten und dann innerhalb von 45 Minuten auf 96° erhitzt. Man färbt 60 Minuten bei 96°. Anschliessend lässt man die Flotte auf 70° abkühlen, das gefärbte Polyamid-Teppichmaterial wird herausgenommen und wie üblich gespült und getrocknet. Man erhält eine kontrastreich gemusterte Teppichware, wobei die als leicht anfärbbar bezeichnete Fasertype praktisch farblos, die als normal-anfärbbar bezeichnete Fasertype in grünstichig-gelben Nuancen und die als tief-anfärbbar bezeichnete Fasertype in tief-grüner Nuance angefärbt ist.

Beispiel 20:

Man färbt 10 Teile eines Polyamid-Teppichmaterials aus einer normal-, tief- und einer als mit sauren Farbstoffen leicht-anfärbbar bezeichneten Polyamidfasertype in 500 Teilen einer wässrigen Flotte, die 1 g/l Ammonacetat, 1,5% eines in Beispiel 15 näher bezeichneten nichtionischen Egalisierhilfsmittels enthält und mit 80%-iger Essigsäure auf pH 4,5 gestellt wird. Als Farbstoff werden 0,25% des blauen Farbstoffs der Formel (12) aus Beispiel 15 verwendet, wobei sich die Mengenangabe auf das Fasergewicht bezieht. Die Färbeflotte wird 20 Minuten auf Raumtemperatur gehalten und dann innerhalb von 45 Minuten auf 70° erhitzt. Man färbt 60 Minuten bei 70°. Das gefärbte Polyamid-Teppichmaterial wird anschliessend herausgenommen und wie üblich gespült und getrocknet. Man erhält ein kontrastreiches Muster der Polyamidteppichware, wobei die als leicht anfärbbar bezeichnete Fasertype praktisch farblos, die als normal-anfärbbar bezeichnete Fasertype in blass-blauer Nuance und die als tief-anfärbbar bezeichnete Fasertype in tief-blauer Nuance angefärbt ist. Die Färbungen zeigen allgemein gute Echtheiten.

Verwendet man anstelle von 0,2% des blauen Farbstoffs der Formel (12) 0,25% der blauen Farbstoffmischung, die aus 90 Teilen des Farbstoffs der Formel

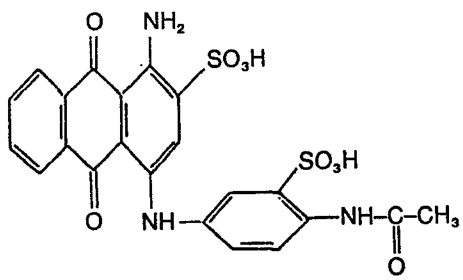

(15)

und

10 Teilen des Farbstoffs der Formel

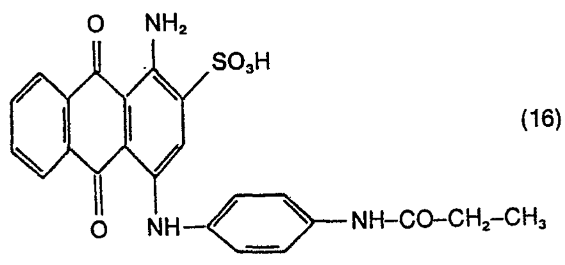

(16)

besteht, so erhält man ebenfalls ein in der oben angegebenen Weise gefärbtes Polyamidteppichmaterial.

Beispiel 21:

Man färbt 10 Teile eines Polyamid-Teppichmaterials aus einer normal-, tief- und einer als mit sauren Farbstoffen leicht-anfärbbar bezeichneten Polyamidfasertype in 500 Teilen einer wässrigen Flotte, die 1 g/l Ammonacetat, 1,5% eines in Beispiel 15 näher bezeichneten nichtionischen Egalisierhilfsmittels enthält und mit 80%-iger Essigsäure auf pH 4,5 gestellt wird. Als Farbstoffe werden 0,24% des gelben Farbstoffs der Formel (9), 0,12% des roten Farbstoffs der Formel (10) aus Beispiel 15 und 0,2% des blauen Farbstoffs der Formel

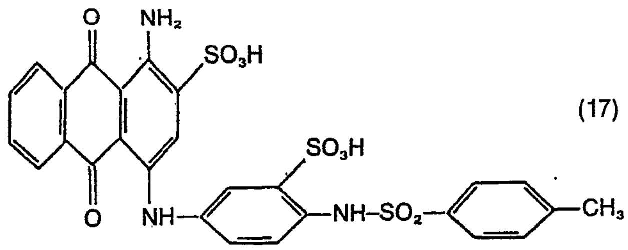

(17)

verwendet, wobei sich die Mengenangaben auf das Fasergewicht beziehen. Die Färbeflotte wird 20 Minuten auf Raumtemperatur gehalten und dann innerhalb von 45 Minuten auf 70° erhitzt. Man färbt 60 Minuten bei 70°. Das gefärbte Polyamid-Teppichmaterial wird anschliessend herausgenommen und wie üblich gespült und getrocknet. Man erhält ein kontrastreiches Muster der Polyamidteppichware, wobei die als leichtanfärbbar bezeichnete Fasertype praktisch farblos, die als normal-anfärbbar bezeichnete Fasertype in orange-roter Nuance und die als tiefanfärbbar bezeichnete Fasertype in brauner Nuance angefärbt ist. Die Färbungen zeigen allgemein gute Echtheiten.

Verwendet man anstelle von 0,2% des blauen Farbstoffs der Formel (17) bei sonst gleicher Verfahrensweise die in der folgenden Tabelle 2 angegebenen Farbstoffe oder Farbstoffmischungen, so erhält man ein in der oben angegebenen Weise gefärbtes Polyamid-Teppichmaterial.

Tabelle 2

| Beispiel | Farbstoff | Menge |
|---|---|---|
| 22 | 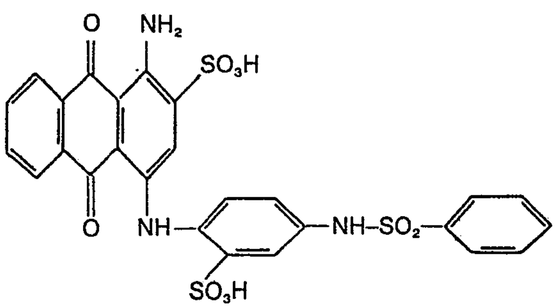 | 0,125% |
| 23 | 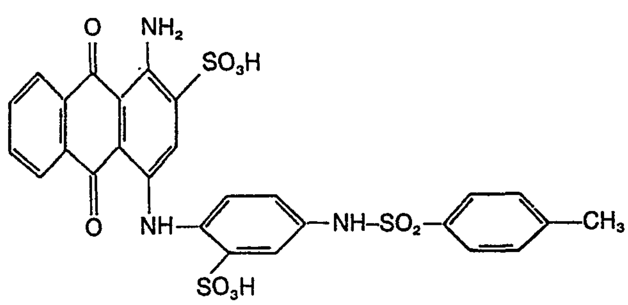 | 0,1% |
| 24 | 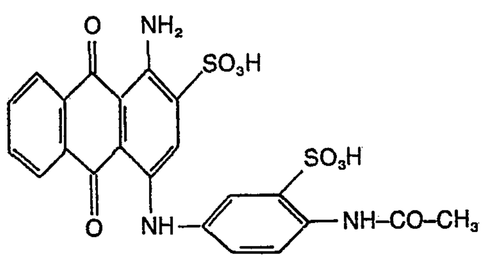 | 0,2% |

Tabelle 2 (Forsetzung)

| Beispiel | Farbstoff | Menge |
|---|---|---|
| 25 | 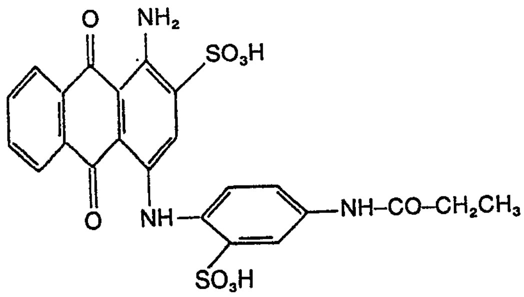 | 0,15% |
| 26 | 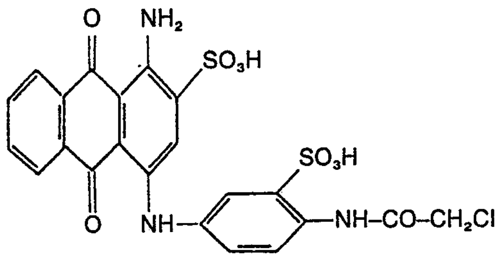 | 0,2% |
| 27 | 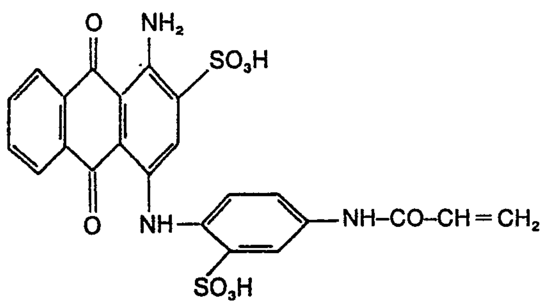 | 0,15% |
| 28 | Mischung aus 90 Teilen des Farbstoffs<br>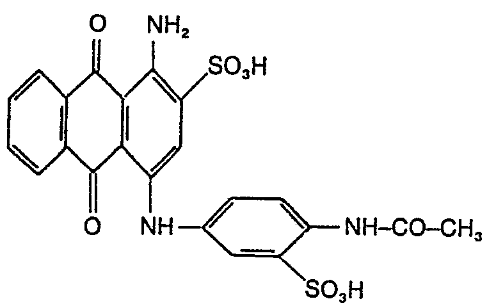<br>und 10 Teilen des Farbstoffs<br>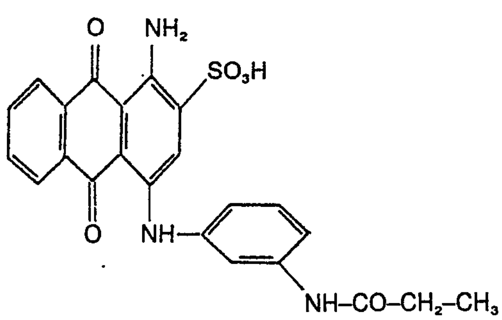 | 0,3% |

Tabelle 2 (Forsetzung)

| Beispiel | Farbstoff | Menge |
|---|---|---|
| 29 | Mischung aus 85 Teilen des Farbstoffs 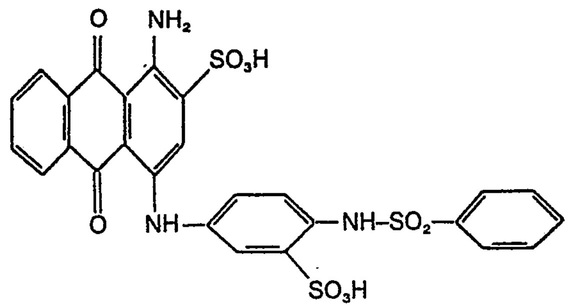 und 15 Teilen des Farbstoffs 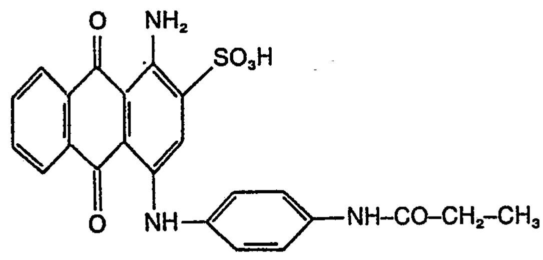 | 0,3% |
| 30 | 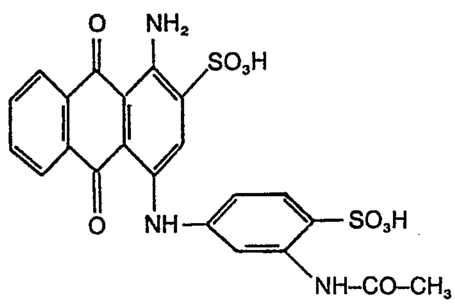 | 0,25% |
| 31 | 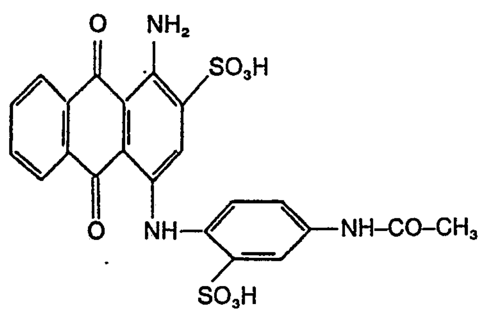 | 0,2% |
| 32 | 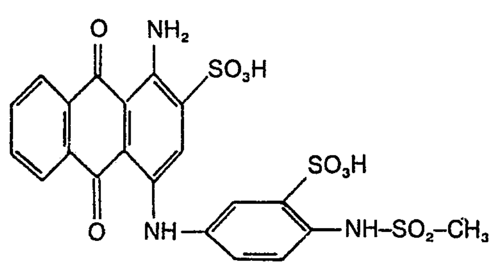 | 0,15% |

Tabelle 2 (Forsetzung)

| Beispiel | Farbstoff | Menge |
|---|---|---|
| 33 | 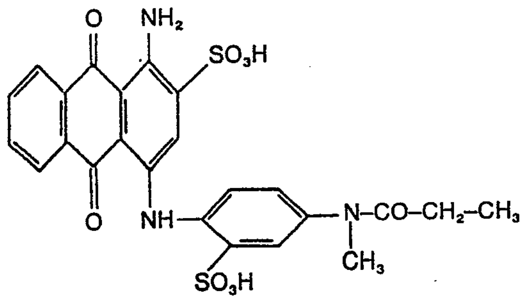 | 0,3% |
| 34 | 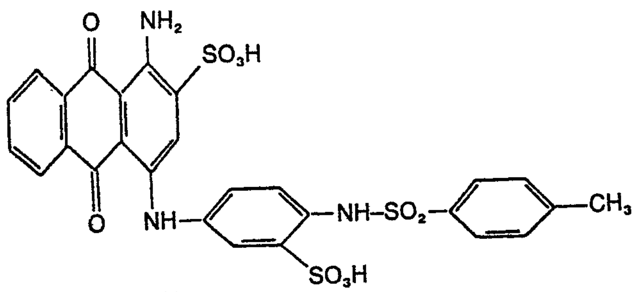 | 0,18% |
| 35 | 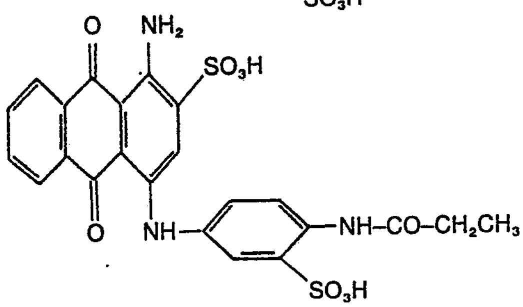 | 0,2% |
| 36 | 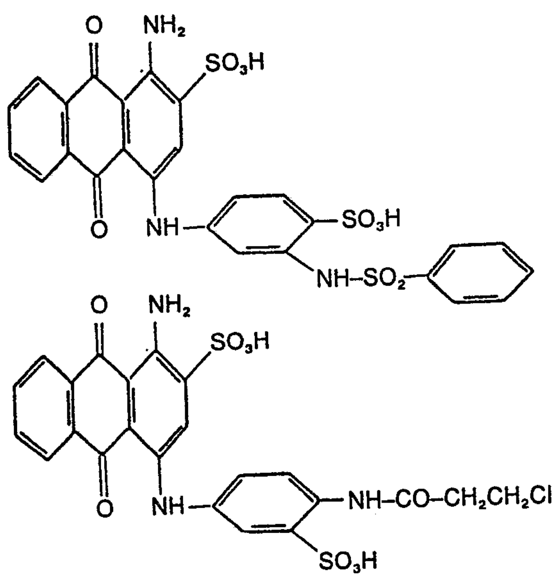 | 0,18% |
| 37 | | 0,2% |
| 38 | 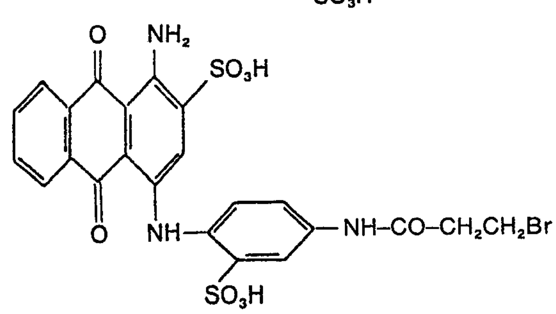 | 0,18% |

Beispiel 39:

Man färbt 10 Teile eines Polyamid-Teppichmaterials aus einer normal-, tief- und einer als mit sauren Farbstoffen leicht anfärbbar bezeichneten Polyamidfasertype in 500 Teilen einer wässrigen Flotte, die 1 g/l Ammonacetat, 1,5% eines nichtionischen Egalisierhilfsmittels auf der Basis eines polyäthoxylierten $C_{20-22}$-Fettamins enthält und mit 80%iger Essigsäure auf pH 4,5 gestellt wird. Als Farbstoff werden 0,15% des blauen Farbstoffs der Formel 12

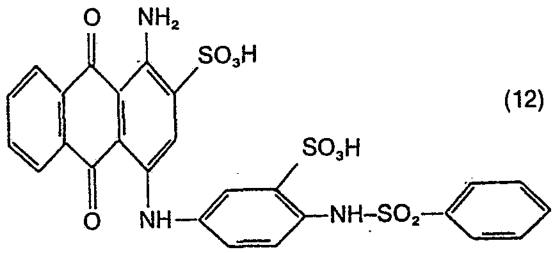

(12)

verwendet, wobei sich die Mengenangabe auf das Fasergewicht bezieht. Die Färbeflotte wird 20 Minuten auf Raumtemperatur gehalten und dann innerhalb von 45 Minuten auf 70° erhitzt. Man färbt 60 Minuten bei 70°. Das gefärbte Polyamid-Teppichmaterial wird anschliessend herausgenommen und wie üblich gespült und getrocknet. Man erhält ein kontrastreiches Muster der Polyamidteppichware, wobei die als leicht anfärbbar bezeichnete Fasertype praktisch farblos, die als normal anfärbbare Fasertype in blauer Nuance und die als tief-anfärbbar bezeichnete Fasertype in dunkelblauer Nuance angefärbt ist. Die Färbungen zeigen allgemein gute Echtheiten.

Beispiel 40:

Verwendet man als Farbstoff ein Gemisch aus 0,15% des blauen Farbstoffs der Formel (12) und 0,24% des gelben Farbstoffs der Formel (9)

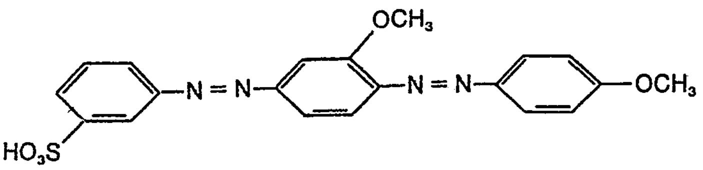

(9)

und färbt wie in Beispiel 39 beschrieben, so erhält man auf Polyamid-Teppichware ein kontrastreiches Muster in hell-gelbgrüner- bis dunkelgrüner Nuance.

Beispiel 41:

Man färbt 10 Teile eines Polyamid-Teppichmaterials aus einer normal-, tief- und einer als mit sauren Farbstoffen leicht anfärbbar bezeichneten Polyamidfasertype in 500 Teilen einer wässrigen Flotte, die 1 g/l Ammonacetat, 1,5% eines nichtionischen Egalisierhilfsmittels auf der Basis eines polyäthoxylierten $C_{20-22}$-Fettamins enthält und mit 80%iger Essigsäure auf pH 4,5 gestellt wird. Als Farbstoff werden 0,15% des blauen Farbstoffs der Formel (12) und 0,12% des roten Farbstoffs der Formel (10) verwendet, wobei sich die Mengenangabe auf das Fasergemisch bezieht. Die Färbeflotte wird 20 Minuten auf Raumtemperatur gehalten und dann innerhalb von 45 Minuten auf 70° erhitzt. Man färbt 60 Minuten bei 70°. Das gefärbte Polyamid-Teppichmaterial wird anschliessend herausgenommen und wie üblich gespült und getrocknet. Man erhält ein kontrastreiches Muster der Polyamidteppichware in blass blaustichig rot- bis tief-violetter Nuance.

**Patentansprüche für die Vertragsstaaten BE, CH, DE, FR, GB, IT, LI NL**

1. Verfahren zum unterschiedlichen Einfärben von Polyamidfasern und polyamidfaserhaltigen Materialien aus unterschiedlich einfärbbaren Komponenten oder Gemischen von Polyamidfasern mit Farbstoffen oder Farbstoffmischen, dadurch gekennzeichnet, dass man zum Färben dieser Materialien eine wässrige Flotte verwendet, welche einen Farbstoff der Formel

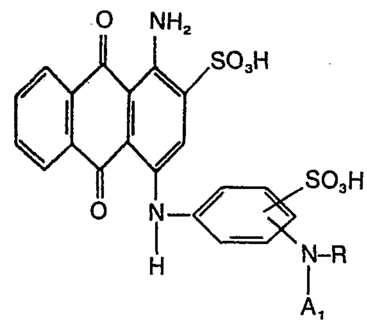

(1),

worin $A_1$ Wasserstoff oder $C_{1-4}$-Alkyl ist und R einen $C_{2-5}$-Alkanoyl-, $C_{3-6}$-Alkenoyl-, Phenoxycarbonyl-, $C_{1-4}$-Alkylsulfonyl- oder Phenylsulfonylrest bedeutet, der im Alkyl-, Alkenyl-, Phenoxy- oder Phenylteil substituiert sein kann, oder eine Mischung eines Farbstoffs der Formel (1) zusammen mit einem monosulfogruppenhaltigen Anthrachinonfarbstoff enthält.

2. Verfahren gemäss Anspruch 1, dadurch gekennzeichnet, dass man einen Farbstoff der Formel (1) verwendet, worin R Acetyl, Chloracetyl, Propionyl, β-Chlor- oder β-Brompropionyl, Acryloyl, Phenoxycarbonyl, Methylsulfonyl, Phenylsulfonyl oder Methylphenylsulfonyl ist.

3. Verfahren gemäss Anspruch 1, dadurch gekennzeichnet, dass man eine Mischung eines Farbstoffs der Formel (1) zusammen mit einem Farbstoff der Formel

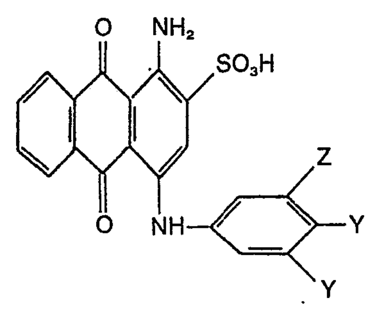

(2),

worin ein Y Wasserstoff oder Methyl und das andere Y $C_{2-4}$-Alkanoylamino oder $C_{2-4}$-Hydroxyalkylsulfamoyl und Z Wasserstoff oder Methyl ist, verwendet.

4. Verfahren gemäss Anspruch 3, dadurch gekennzeichnet, dass man eine Mischung der Farbstoffe der Formeln (1) und (2) im Verhältnis 99:1 bis 70:30 und insbesondere im Verhältnis 90:10 bis 80:20 verwendet.

5. Verfahren gemäss Anspruch 2, dadurch gekennzeichnet, dass man einen Farbstoff der Formel

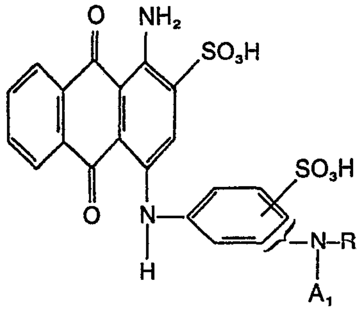

(3),

worin $A_1$ Wasserstoff, Methyl oder Äthyl ist und R die in Anspruch 2 angegebene Bedeutung hat, verwendet.

6. Verfahren gemäss Anspruch 5, dadurch gekennzeichnet, dass man einen Farbstoff der Formel

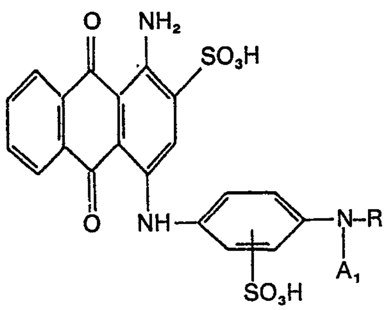

(4),

worin $A_1$ Wasserstoff oder Methyl ist und R die in Anspruch 5 angegebene Bedeutung hat, verwendet.

7. Verfahren gemäss Anspruch 6, dadurch gekennzeichnet, dass man einen Farbstoff der Formel (4) verwendet, worin R Acetyl, Chloracetyl, Propionyl, β-Chlor- oder β-Brompropionyl, Acryloyl, Methylsulfonyl, Phenylsulfonyl oder p-Methylphenylsulfonyl ist.

8. Verfahren gemäss Anspruch 4, dadurch gekennzeichnet, dass man eine Mischung der Farbstoffe der Formeln

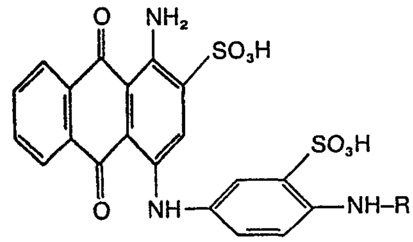

(5)

und

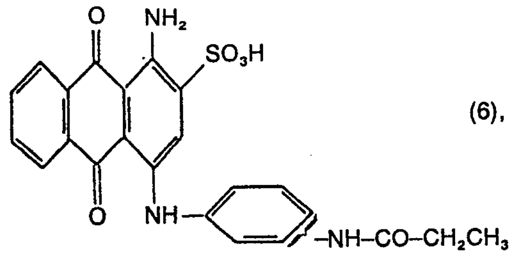

(6),

worin R in Formel (5) Acetyl, p-Methylphenylsulfonyl oder Phenylsulfonyl ist, verwendet.

9. Verfahren gemäss Anspruch 1, dadurch gekennzeichnet, dass man einen Farbstoff der Formel (1) verwendet, worin $A_1$ Wasserstoff ist.

10. Verfahren gemäss Anspruch 1, dadurch gekennzeichnet, dass man einen Farbstoff der Formel (1) verwendet, worin R einen $C_{1-4}$-Alkylsulfonyl- oder Phenylsulfonylrest bedeutet, der im Phenylteil substituiert sein kann.

11. Verfahren gemäss Anspruch 7, dadurch gekennzeichnet, dass man einen Farbstoff der Formel (4) verwendet, worin $A_1$ Wasserstoff und R Phenylsulfonyl oder p-Methylphenylsulfonyl ist.

12. Verfahren gemäss Anspruch 1, dadurch gekennzeichnet, dass man einen Farbstoff der Formel (1) oder eine Mischung eines Farbstoffes der Formel (1) mit einem monosulfogruppenhaltigen Anthrachinonfarbstoff zusammen mit für reguläre Polyamidfasern geeigneten Säurefarbstoffen verwendet.

13. Verfahren gemäss Anspruch 12, dadurch gekennzeichnet, dass man als geeignete Säurefarbstoffe mindestens einen gelben Farbstoff und/oder mindestens einen roten Farbstoff verwendet.

14. Verfahren gemäss Anspruch 13, dadurch gekennzeichnet, dass man als gelben Farbstoff mindestens einen Farbstoff der Formel

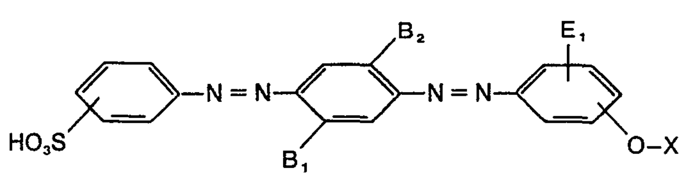

(7),

worin $B_1$, $B_2$ und $E_1$ Wasserstoff, $C_{1-4}$-Alkyl oder $C_{1-4}$-Alkoxy und Y geradkettiges oder verzweigtes $C_{1-4}$-Alkyl oder geradkettiges oder verzweigtes $C_{2-4}$-Hydroxyalkyl bedeuten, verwendet.

15. Verfahren gemäss Anspruch 13, dadurch gekennzeichnet, dass man als roten Farbstoff mindestens einen Farbstoff der Formel

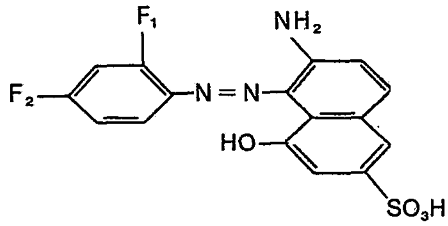

(8),

worin $F_1$ Wasserstoff, gegebenenfalls substituiertes $C_{1-4}$-Alkyl,

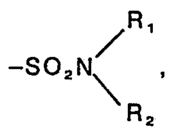

,

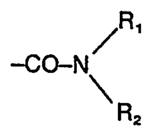

oder $-SO_2R_3$ ist, wobei $R_1$ $C_{1-4}$-Alkyl, $R_2$ gegebenenfalls substituiertes $C_{5-7}$-Cycloalkyl oder gegebenenfalls substituiertes Phenyl und $R_3$ gegebenenfalls substituiertes Phenyl oder gegebenenfalls substituiertes Phenoxy ist, und $F_2$ Wasserstoff, Halogen, $C_{2-4}$-Alkanoylamino, $C_{5-8}$-Cycloalkoxycarbonylamino, $C_{1-4}$-Alkylsulfonylamino oder gegebenenfalls substituiertes Phenylsulfonylamino bedeutet, verwendet.

16. Verfahren gemäss Anspruch 15, dadurch gekennzeichnet, dass man mindestens einen roten Farbstoff der Formel (8) verwendet, worin $F_1$ Trifluormethyl, N-Methyl-N-cyclohexylsulfamoyl oder N-Äthyl-N-phenylsulfamoyl und $F_2$ Wasserstoff, Chlor oder Acetylamino ist.

17. Verfahren gemäss Anspruch 13, dadurch gekennzeichnet, dass man als geeignete Säurefarbstoffe mindestens einen Farbstoff der Formel

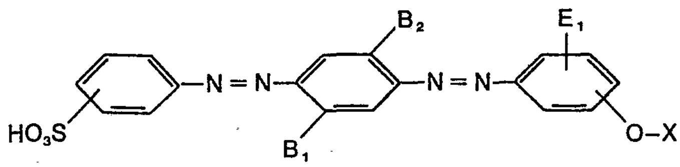

(7),

worin $B_1$, $B_2$ und $E_1$ Wasserstoff, $C_{1-4}$-Alkyl oder $C_{1-4}$-Alkoxy und X geradkettiges oder verzweigtes $C_{1-4}$-Alkyl oder geradkettiges oder verzweigtes $C_{2-4}$-Hydroxyalkyl bedeuten und mindestens einen Farbstoff der Formel

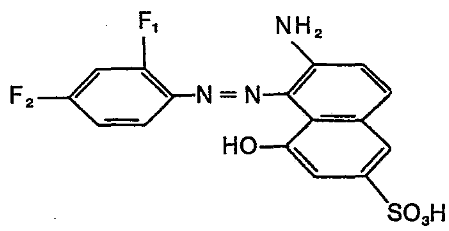

(8),

worin $F_1$ Trifluormethyl, N-Methyl-N-cyclohexylsulfamoyl oder N-Äthyl-N-phenylsulfamoyl und $F_2$ Wasserstoff, Chlor oder Acerylamino ist, verwendet.

18. Verfahren gemäss Anspruch 12, dadurch gekennzeichnet, dass man einen Farbstoff der Formel

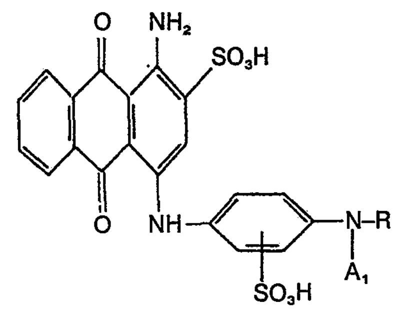

(4),

worin $A_1$ Wasserstoff oder Methyl ist und R Acetyl, Chloracetyl, Propionyl, β-Chlor- oder β-Brompropionyl, Acryloyl, Methylsulfonyl, Phenylsulfonyl oder p-Methylphenylsulfonyl bedeutet, oder eine Mischung eines Farbstoffs der Formel (4), worin $A_1$ Wasserstoff und R Acetyl oder Phenylsulfonyl bedeutet, mit einem Farbstoff der Formel

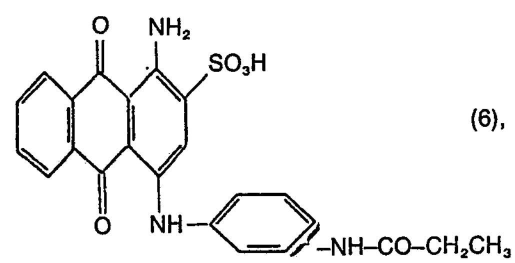

(6),

zusammen mit dem Farbstoff der Formel

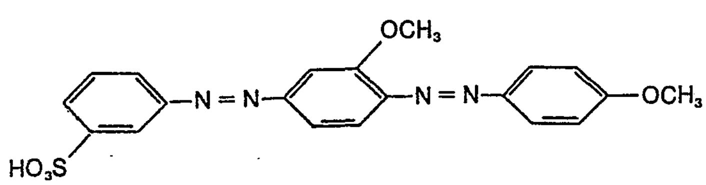

(9)

und dem Farbstoff der Formel

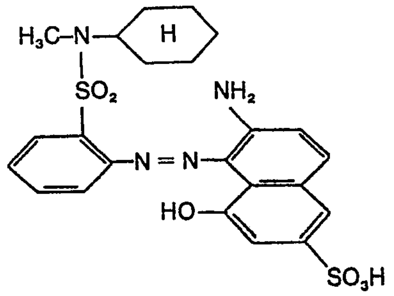

(10),

verwendet.

19. Verfahren gemäss einem der Ansprüche 1 bis 18, dadurch gekennzeichnet, dass man bei einer Temperatur zwischen 50 und 100 °C, insbesondere bei 70 bis 96 °C färbt.

20. Das nach dem Verfahren gemäss Anspruch 1 gefärbte Material, insbesondere das Textilmaterial.

21. Das gemäss Anspruch 20 gefärbte Polyamid-Teppichmaterial.

22. Farbstoffe der Formel

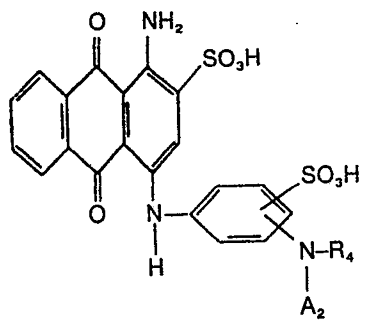

(11),

worin $A_2$ Wasserstoff oder $C_{1-4}$-Alkyl und $R_4$ einen $C_{1-4}$-Alkylsulfonyl- oder Phenylsulfonylrest bedeutet, der im Phenylteil durch $C_{1-4}$-Alkyl substituiert sein kann.

23. Farbstoffe gemäss Anspruch 22, worin $A_2$ Wasserstoff ist.

24. Farbstoffe gemäss Anspruch 22, worin $R_4$ Phenylsulfonyl oder Methylphenylsulfonyl ist.

25. Der Farbstoff gemäss Anspruch 24 der Formel

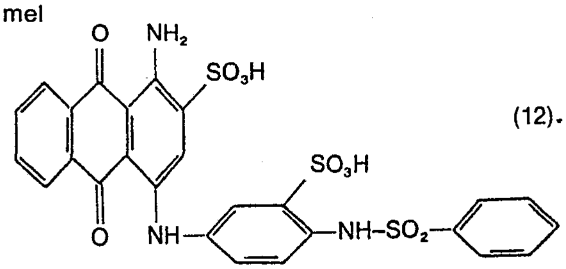

(12).

26. Der Farbstoff gemäss Anspruch 24 der Formel

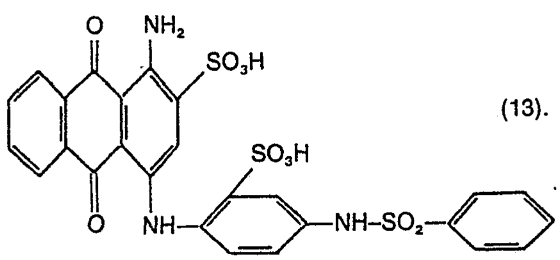

(13).

27. Verfahren zur Herstellung der Farbstoffe gemäss Anspruch 22, dadurch gekennzeichnet, dass man eine Verbindung der Formel

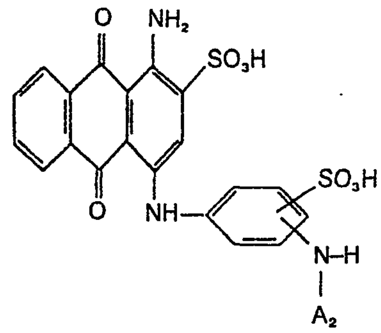

(14),

worin $A_2$ die unter Formel (11) angegebene Bedeutung hat, mit einer den Rest $R_4$ einführenden Verbindung acyliert.

28. Verfahren gemäss Anspruch 27, dadurch gekennzeichnet, dass man von einer Verbindung der Formel (14) ausgeht, worin $A_2$ Wasserstoff ist.

29. Verfahren gemäss Anspruch 27, dadurch gekennzeichnet, dass man mit einer den Rest $R_4$ einführenden Verbindung acyliert, worin $R_4$ Phenylsulfonyl oder Methylphenylsulfonyl ist.

30. Verfahren gemäss Anspruch 29, dadurch gekennzeichnet, dass man
1-Amino-4-(3′-sulfo-4′-aminophenylamino)-anthrachinon-2-sulfonsäure
mit Phenylsulfonylchlorid umsetzt.

31. Verfahren gemäss Anspruch 29, dadurch gekennzeichnet, dass man
1-Amino-4-(2′-sulfo-4′-aminophenylamino)-anthrachinon-2-sulfonsäure
mit Phenylsulfonylchlorid umsetzt.

32. Verfahren zum Färben und Bedrucken unter Verwendung der gemäss Anspruch 27 hergestellten Farbstoffe.

33. Verfahren gemäss Anspruch 32 zum Färben von synthetischen und natürlichen Polyamidfasern.

**Patentansprüche für den Vertragsstaat AT**

1. Verfahren zum unterschiedlichen Einfärben von Polyamidfasern und polyamidfaserhaltigen Materialien aus unterschiedlich einfärbbaren Komponenten oder Gemischen von Polyamidfasern mit Farbstoffen oder Farbstoffmischen, dadurch gekennzeichnet, dass man zum Färben dieser Materialien eine wässrige Flotte verwendet, welche einen Farbstoff der Formel

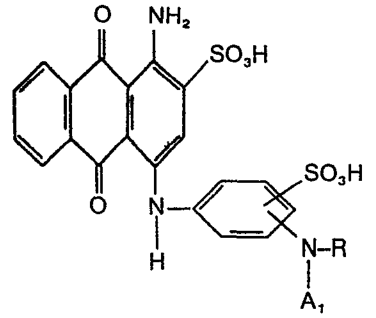

(1),

worin $A_1$ Wasserstoff oder $C_{1-4}$-Alkyl ist und R einen $C_{2-5}$-Alkanoyl-, $C_{3-6}$-Alkenoyl-, Phenoxycarbonyl-, $C_{1-4}$-Alkylsulfonyl- oder Phenylsulfonylrest bedeutet, der im Alkyl-, Alkenyl-, Phenoxy- oder Phenylteil substituiert sein kann, oder eine Mischung eines Farbstoffs der Formel (1) zusammen mit einem monosulfogruppenhaltigen Anthrachinonfarbstoff enthält.

2. Verfahren gemäss Anspruch 1, dadurch gekennzeichnet, dass man einen Farbstoff der Formel (1) verwendet, worin R Acetyl, Chloracetyl, Propionyl, β-Chlor- oder β-Brompropionyl, Acryloyl, Phenoxycarbonyl, Methylsulfonyl, Phenylsulfonyl oder Methylphenylsulfonyl ist.

3. Verfahren gemäss Anspruch 1, dadurch gekennzeichnet, dass man eine Mischung eines Farbstoffs der Formel (1) zusammen mit einem Farbstoff der Formel

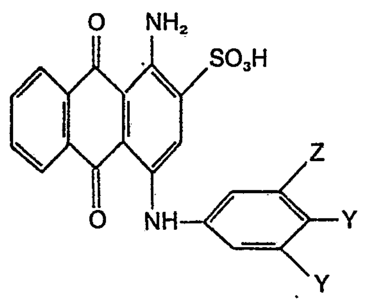

(2),

worin ein Y Wasserstoff oder Methyl und das andere Y $C_{2-4}$-Alkanoylamino oder $C_{2-4}$-Hydroxyalkylsulfamoyl und Z Wasserstoff oder Methyl ist, verwendet.

4. Verfahren gemäss Anspruch 3, dadurch gekennzeichnet, dass man eine Mischung der Farbstoffe der Formeln (1) und (2) im Verhältnis 99:1 bis 70:30 und insbesondere im Verhältnis 90:10 bis 80:20 verwendet.

5. Verfahren gemäss Anspruch 2, dadurch gekennzeichnet, dass man einen Farbstoff der Formel

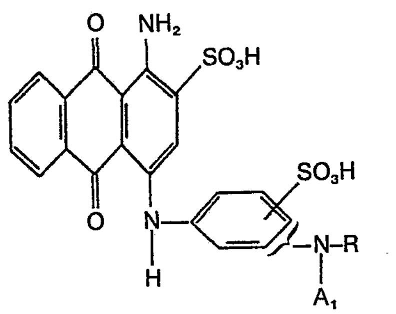

(3),

worin $A_1$ Wasserstoff, Methyl oder Äthyl ist und R die in Anspruch 2 angegebene Bedeutung hat, verwendet.

6. Verfahren gemäss Anspruch 5, dadurch gekennzeichnet, dass man einen Farbstoff der Formel

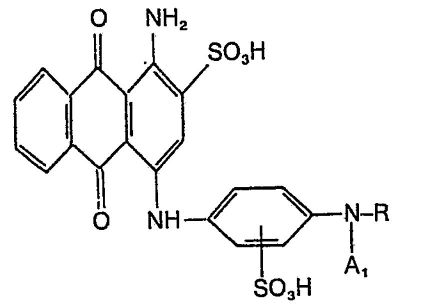

(4),

worin $A_1$ Wasserstoff oder Methyl ist und R die in Anspruch 5 angegebene Bedeutung hat, verwendet.

7. Verfahren gemäss Anspruch 6, dadurch gekennzeichnet, dass man einen Farbstoff der Formel (4) verwendet, worin R Acetyl, Chloracetyl, Propionyl, β-Chlor- oder β-Brompropionyl, Acryloyl, Methylsulfonyl, Phenylsulfonyl oder p-Methylphenylsulfonyl ist.

8. Verfahren gemäss Anspruch 4, dadurch gekennzeichnet, dass man eine Mischung der Farbstoffe der Formeln

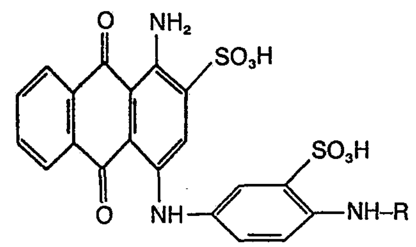

(5)

und

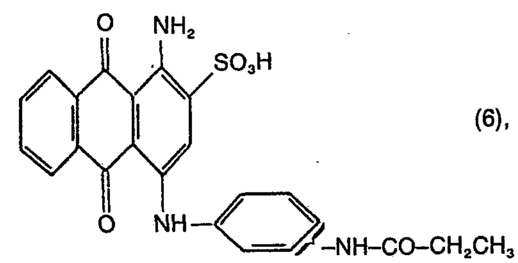

(6),

worin R in Formel (5) Acetyl-, p-Methylphenylsulfonyl oder Phenylsulfonyl ist, verwendet.

9. Verfahren gemäss Anspruch 1, dadurch gekennzeichnet, dass man einen Farbstoff der Formel (1) verwendet, worin $A_1$ Wasserstoff ist.

10. Verfahren gemäss Anspruch 1, dadurch gekennzeichnet, dass man einen Farbstoff der Formel (1) verwendet, worin R einen $C_{1-4}$-Alkylsulfonyl- oder Phenylsulfonylrest bedeutet, der im Phenylteil substituiert sein kann.

11. Verfahren gemäss Anspruch 7, dadurch gekennzeichnet, dass man einen Farbstoff der Formel (4) verwendet, worin $A_1$ Wasserstoff und R Phenylsulfonyl oder p-Methylphenylsulfonyl ist.

12. Verfahren gemäss Anspruch 1, dadurch gekennzeichnet, dass man einen Farbstoff der Formel (1) oder eine Mischung eines Farbstoffes der Formel (1) mit einem monosulfogruppenhaltigen Anthrachinonfarbstoff zusammen mit für reguläre Polyamidfasern geeigneten Säurefarbstoffen verwendet.

13. Verfahren gemäss Anspruch 12, dadurch gekennzeichnet, dass man als geeignete Säurefarbstoffe mindestens einen gelben Farbstoff und/oder mindestens einen roten Farbstoff verwendet.

14. Verfahren gemäss Anspruch 13, dadurch gekennzeichnet, dass man als gelben Farbstoff mindestens einen Farbstoff der Formel

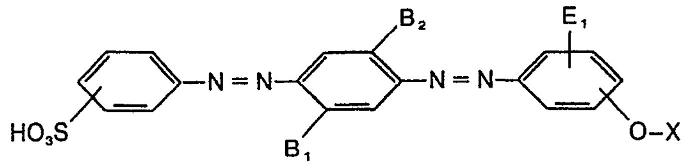
(7),

worin $B_1$, $B_2$ und $E_1$ Wasserstoff, $C_{1-4}$-Alkyl oder $C_{1-4}$-Alkoxy und X geradkettiges oder verzweigtes $C_{1-4}$-Alkyl oder geradkettiges oder verzweigtes $C_{2-4}$-Hydroxyalkyl bedeuten, verwendet.

15. Verfahren gemäss Anspruch 13, dadurch gekennzeichnet, dass man als roten Farbstoff mindestens einen Farbstoff der Formel

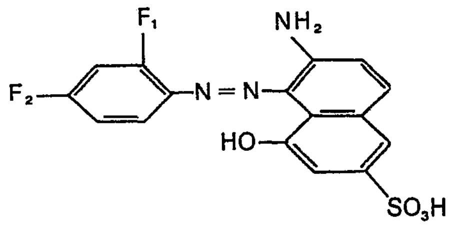
(8),

worin $F_1$ Wasserstoff, gegebenenfalls substituiertes $C_{1-4}$-Alkyl,

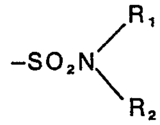 , 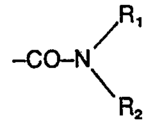

oder $-SO_2R_3$ ist, wobei $R_1$ $C_{1-4}$-Alkyl, $R_2$ gegebenenfalls substituiertes $C_{5-7}$-Cycloalkyl oder gegebenenfalls substituiertes Phenyl und $R_3$ gegebenenfalls substituiertes Phenyl oder gegebenenfalls substituiertes Phenoxy ist, und $F_2$ Wasserstoff, Halogen, $C_{2-4}$-Alkanoylamino, $C_{5-8}$-Cycloalkoxycarbonylamino, $C_{1-4}$-Alkoxycarbonylamino, $C_{1-4}$-Alkylsulfonylamino oder gegebenenfalls substituiertes Phenylsulfonylamino bedeutet, verwendet.

16. Verfahren gemäss Anspruch 15, dadurch gekennzeichnet, dass man mindestens einen roten Farbstoff der Formel (8) verwendet, worin $F_1$ Trifluormethyl, N-Methyl-N-cyclohexylsulfamoyl oder N-Äthyl-N-phenylsulfamoyl und $F_2$ Wasserstoff, Chlor oder Acetylamino ist.

17. Verfahren gemäss Anspruch 13, dadurch gekennzeichnet, dass man als geeignete Säurefarbstoffe mindestens einen Farbstoff der Formel

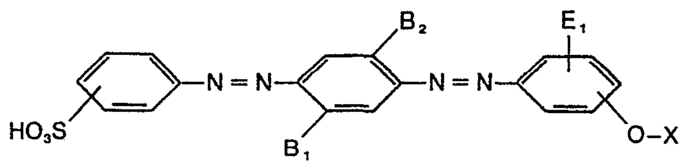
(7),

worin $B_1$, $B_2$ und $E_1$ Wasserstoff, $C_{1-4}$-Alkyl oder $C_{1-4}$-Alkoxy und X geradkettiges oder verzweigtes $C_{1-4}$-Alkyl oder geradkettiges oder verzweigtes $C_{2-4}$-Hydroxyalkyl bedeuten und mindestens einen Farbstoff der Formel

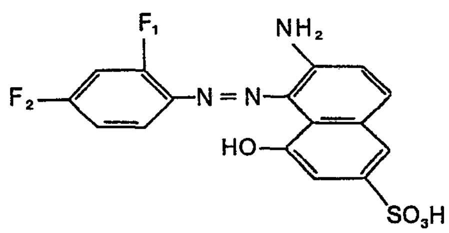
(8),

worin $F_1$ Trifluormethyl, N-Methyl-N-cyclohexylsulfamoyl oder N-Äthyl-N-phenylsulfamoyl und $F_2$ Wasserstoff, Chlor oder Acetylamino ist, verwendet.

18. Verfahren gemäss Anspruch 12, dadurch gekennzeichnet, dass man einen Farbstoff der Formel

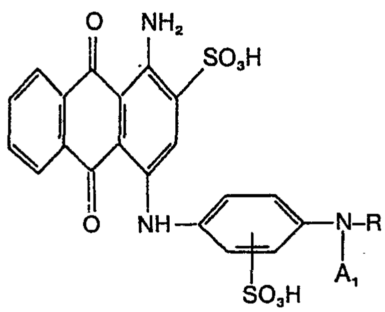
(4),

worin $A_1$ Wasserstoff oder Methyl ist und R Acetyl, Chloracetyl, Propionyl, β-Chlor- oder β-Brompropionyl, Acryloyl, Methylsulfonyl, Phenylsulfonyl oder p-Methylphenylsulfonyl bedeutet, oder eine Mischung eines Farbstoffs der Formel (4), worin $A_1$ Wasserstoff und R Acetyl oder Phenylsulfonyl bedeutet, mit einem Farbstoff der Formel

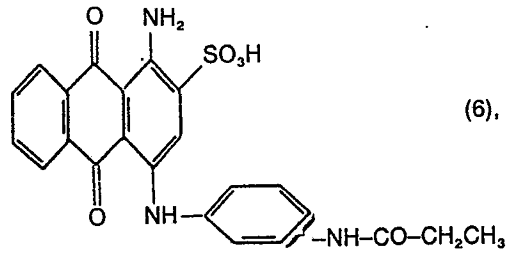

(6),

zusammen mit dem Farbstoff der Formel

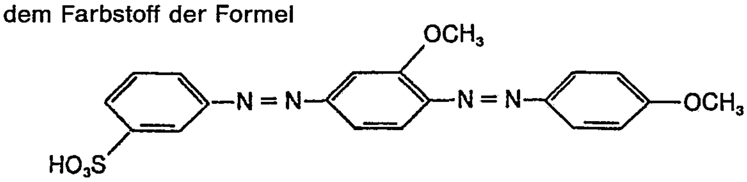

(9)

und dem Farbstoff der Formel

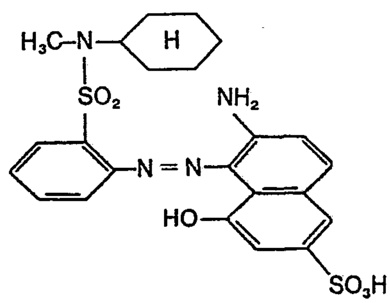

(10),

verwendet.

19. Verfahren gemäss einem der Ansprüche 1 bis 18, dadurch gekennzeichnet, dass man bei einer Temperatur zwischen 50 und 100 °C, insbesondere bei 70 bis 96 °C färbt.

20. Das nach dem Verfahren gemäss Anspruch 1 gefärbte Material, insbesondere das Textilmaterial.

21. Das gemäss Anspruch 20 gefärbte Polyamid-Teppichmaterial.

22. Verfahren zur Herstellung der Farbstoffe der Formel

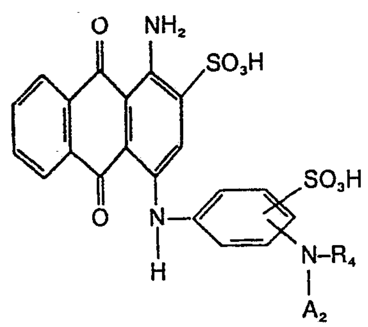

(11),

worin $A_2$ Wasserstoff oder $C_{1-4}$-Alkyl und $R_4$ einen $C_{1-4}$-Alkylsulfonyl- oder Phenylsulfonylrest, der im Phenylteil durch $C_{1-4}$-Alkyl substituiert sein kann, bedeutet, dadurch gekennzeichnet, dass man eine Verbindung der Formel

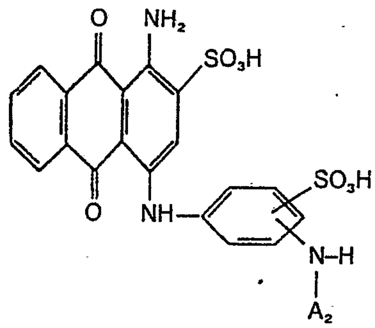

(14),

worin $A_2$ die unter Formel (11) angegebene Bedeutung hat, mit einer den Rest $R_4$ einführenden Verbindung acyliert.

23. Verfahren gemäss Anspruch 22, dadurch gekennzeichnet, dass man von einer Verbindung der Formel (14) ausgeht, worin $A_2$ Wasserstoff ist.

24. Verfahren gemäss Anspruch 22, dadurch gekennzeichnet, dass man mit einer den Rest $R_4$ einführenden Verbindung acyliert, worin $R_4$ Phenylsulfonyl oder Methylphenylsulfonyl ist.

25. Verfahren gemäss Anspruch 24, dadurch gekennzeichnet, dass man
1-Amino-4-(3'-sulfo-4'-aminophenylamino)-anthrachinon-2-sulfonsäure
mit Phenylsulfonylchlorid umsetzt.

26. Verfahren gemäss Anspruch 24, dadurch gekennzeichnet, dass man
1-Amino-4-(2'-sulfo-4'-aminophenylamino)-anthrachinon-2-sulfonsäure
mit Phenylsulfonylchlorid umsetzt.

27. Verfahren zum Färben und Bedrucken unter Verwendung der gemäss Anspruch 22 hergestellten Farbstoffe.

28. Verfahren gemäss Anspruch 27 zum Färben von synthetischen und natürlichen Polyamidfasern.

**Claims for the Contracting States: DE, GB, FR, CH, LI, IT, NL, BE**

1. A process for the differential dyeing of such polyamide fibres and materials containing polyamide fibres as are made of components which differ in dyeability, or mixtures of polyamide fibres, with dyes or dye mixtures, which process comprises using for dyeing these materials an aqueous liquor which contains a dye of the formula

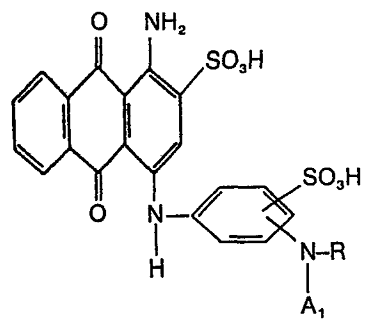

(1)

in which $A_1$ is hydrogen or $C_{1-4}$-alkyl and R is a $C_{2-5}$-alkanoyl, $C_{3-6}$-alkenoyl, phenoxycarbonyl, $C_{1-4}$-alkylsulfonyl or phenylsulfonyl radical, each of which radicals may be substituted in the alkyl, alkenyl, phenoxy or phenyl moiety, or a mixture of a dye of the formula (1) with a monosulfocontaining anthraquinone dye.

2. A process according to claim 1, which comprises the use of a dye of the formula (1) in which R is acetyl, chloroacetyl, propionyl, β-chloropropionyl, β-bromopropionyl, acryloyl, phenoxycarbonyl, methylsulfonyl, phenylsulfonyl or methylphenylsulfonyl.

3. A process according to claim 1, which comprises the use of a mixture of a dye of the formula (1) with a dye of the formula

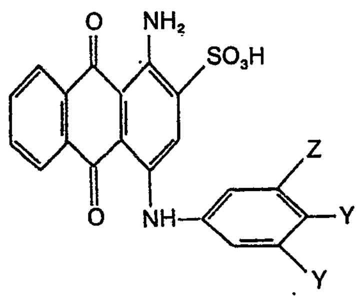

(2)

in which one Y is hydrogen or methyl and the other Y is $C_{2-4}$-alkanoylamino or $C_{2-4}$-hydroxyalkylsulfamoyl, and Z is hydrogen or methyl.

4. A process according to claim 3, which comprises the use of a mixture of dyes of the formulae (1) and (2) in a ration of 99:1 ot 70:30 or, in particular, in a ration of 90:10 to 80:20.

5. A process according to claim 2, which comprises the use of a dye of the formula

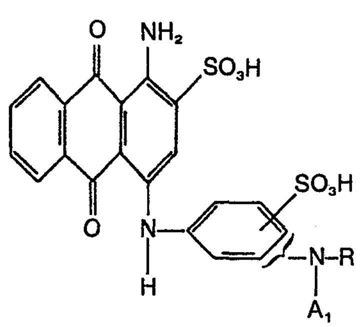

(3)

in which $A_1$ is hydrogen, methyl or ethyl and R is as defined in claim 2.

6. A process according to claim 5, which comprises the use of a dye of the formula

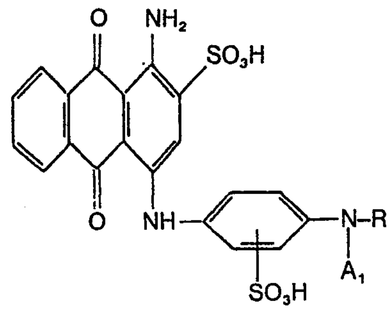

(4)

in which $A_1$ is hydrogen or methyl and R is as defined in claim 5.

7. A process according to claim 6, which comprises the use of a dye of the formula (4) in which R is acetyl, Chloroacetyl, propionyl, β-chloropropionyl, β-bromopropionyl, acryloyl, methylsulfonyl, phenylsulfonyl or p-methylphenylsulfonyl.

8. A process according to claim 4, which comprises the use of a mixture of dyes of the formulae

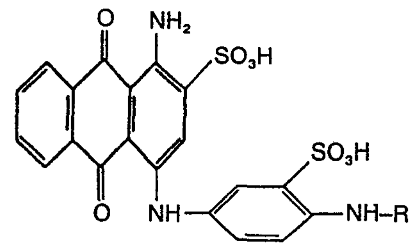

(5)

and

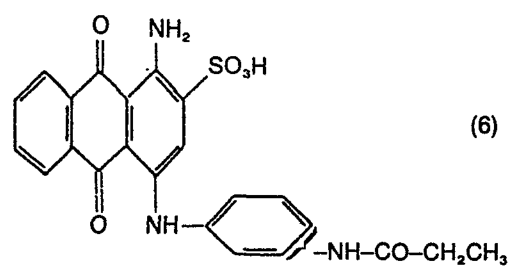

(6)

in which formula (5) R is acetyl, p-methylphenylsulfonyl or phenylsulfonyl.

9. A process according to claim 1, which comprises the use of a dye of the formula (1) in which $A_1$is hydrogen.

10. A process according to claim 1, which comprises the use of a dye of the formula (1) in which R is a $C_{1-4}$-alkylsulfonyl radical or a phenylsulfonyl radical which may be substituted in the phenyl moiety.

11. A process according to claim 7, which comprises the use of a dye of the formula (4) in which $A_1$ is hydrogen and R is phenylsulfonyl or p-methylphenylsulfonyl.

12. A process according to claim 1, which comprises the use of a dye of the formula (1) or a mixture of a dye of the formula (1) with a monosulfo-containing anthraquinone dye together with acid dyes suitable for normal polyamide fibres.

13. A process according to claim 12, wherein the suitable acid dyes are at least one yellow dye and/or at least one red dye.

14. A process according to claim 13, wherein the yellow dye is at least one dye of the formula

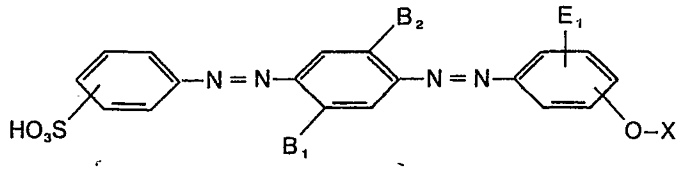

(7)

in which $B_1$, $B_2$ and $E_1$ are hydrogen, $C_{1-4}$-alkyl or $C_{1-4}$-alkoxy and X is straight chain or branched $C_{1-4}$-alkyl or straight chain or branched $C_{2-4}$-hydroxyalkyl.

15. A process according to claim 13, wherein the red dye is at least one dye of the formula

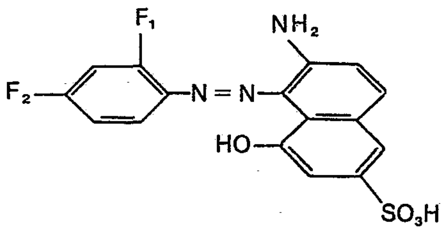

(8)

in which $F_1$ is hydrogen, substituted or unsubstituted $C_{1-4}$-alkyl,

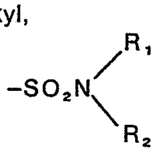

,

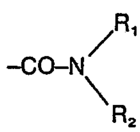

or $-SO_2R_3$ in which $R_1$ is $C_{1-4}$-alkyl, $R_2$ is substituted or unsubstituted $C_{5-7}$-cycloalkyl or substituted or unsubstituted phenyl and $R_3$ is substituted or unsubstituted phenyl or substituted or unsubstituted phenoxy, and $F_2$ is hydrogen, halogen, $C_{2-4}$-alkanoylamino, $C_{5-8}$-cycloalkoxycarbonylamino, $C_{1-4}$-alkoxycarbonylamino, $C_{1-4}$-alkylsulfonylamino or substituted or unsubstituted phenylsulfonylamino.

16. A process according to claim 15, which comprises the use of at least one red dye of the formula (8) in which $F_1$ is trifluoromethyl, N-methyl-N-cyclohexylsulfamoyl or N-ethyl-N-phenylsulfamoyl and $F_2$ is hydrogen, chlorine or acetylamino.

17. A process according to claim 13, wherein the suitable acid dyes are at least one dye of the formula

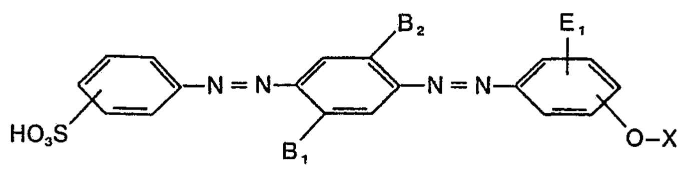

(7)

in which $B_1$, $B_2$ and $E_1$ are hydrogen, $C_{1-4}$-alkyl or $C_{1-4}$-alkoxy and X is straight chain or branched $C_{1-4}$-alkyl or straight chain or branched $C_{2-4}$-hydroxyalkyl and at least one dye of the formula

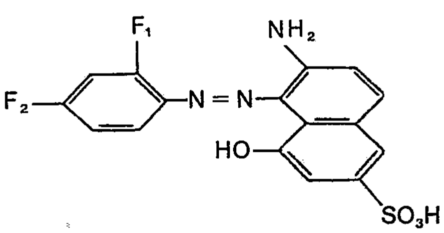

(8)

in which $F_1$ is trifluoromethyl, N-methyl-N-cyclohexylsulfamoyl or N-ethyl-N-phenylsulfamoyl and $F_2$ is hydrogen, chlorine or acetylamino.

18. A process according to claim 12, which comprises the use of a dye of the formula

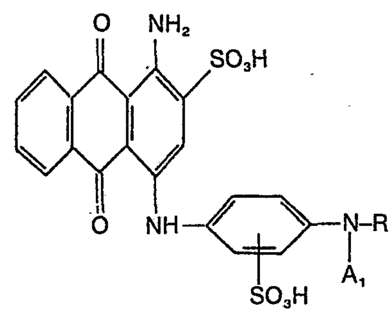

(4)

in which $A_1$ is hydrogen or methyl and R is acetyl, chloroacetyl, propionyl, β-chloropropionyl, β-bromopropionyl, acryloyl, methylsulfonyl, phenylsulfonyl or p-methylphenylsulfonyl, or a mixture of a dye of the formula (4) in which $A_1$ is hydrogen and R is acetyl or phenylsulfonyl, with a dye of the formula

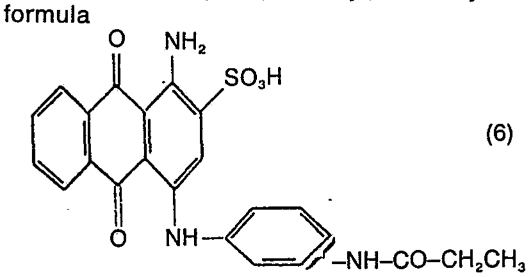

(6)

together with the dye of the formula

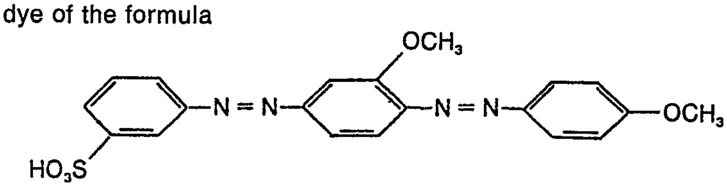
(9)

and the dye of the formula

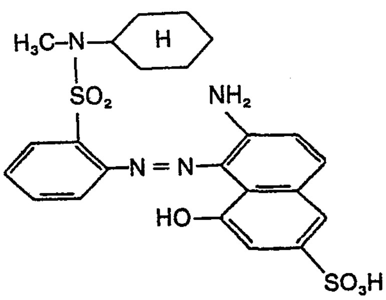
(10)

19. A process according to any one of claims 1 to 18, wherein dyeing is carried out at a temperature in the range from 50 to 100 °C, in particular from 70 to 96 °C.

20. The material, in particular textile material, dyed by the process of claim 1.

21. Dyed polyamide carpet material according to claim 20.

22. A dye of the formula

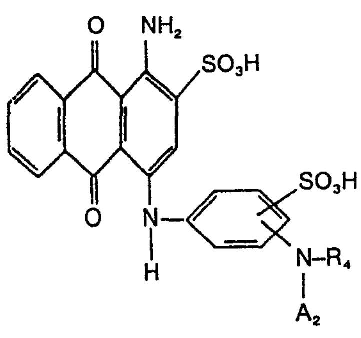
(11)

in which $A_2$ is hydrogen or $C_{1-4}$-alkyl and $R_4$ is a $C_{1-4}$-alkylsulfonyl radical or a phenylsulfonyl radical which may be substituted in the phenyl moiety by $C_{1-4}$-alkyl.

23. A dye as claimed in claim 22, in which $A_2$ is hydrogen.

24. A dye as claimed in claim 22, in which $R_4$ is phenylsulfonyl or methylphenylsulfonyl.

25. A dye as claimed in claim 24, of the formula

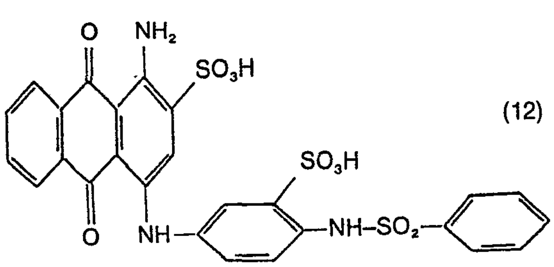
(12)

26. A dye as claimed in claim 24, of the formula

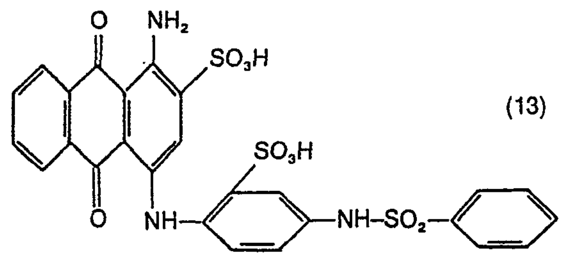
(13)

27. A process for the preparation of a dye as claimed in claim 22, which process comprises acylating a compound of the formula

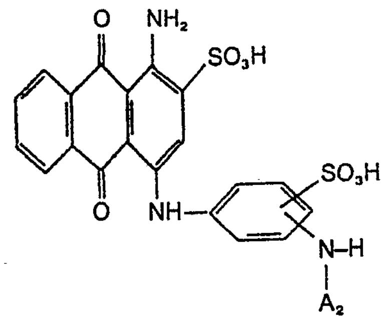
(14)

in which $A_2$ is as defined for formula (11), with a compound which introduces the radical $R_4$.

28. A process according to claim 27, which comprises starting from a compound of the formula (14) in which $A_2$ is hydrogen.

29. A process according to claim 27, which comprises effecting the acylation with a compound which introduces the radical $R_4$, in which compound $R_4$ is phenylsulfonyl or methylphenylsulfonyl.

30. A process according to claim 29, which comprises reacting 1-amino-4-(3′-sulfo-4′-aminophenylamino)anthraquinone-2-sulfonic acid with phenylsulfonyl chloride.

31. A process according to claim 29, which comprises reacting 1-amino-4-(2′-sulfo-4′-aminophenylamino)anthraquinone-2-sulfonic acid with phenylsulfonyl chloride.

32. A process for dyeing or printing, which comprises the use of a dye prepared according to claim 27.

33. A process according to claim 32 for dyeing synthetic and natural polyamide fibres.

**Claims for the Contracting State: AT**

1. A process for the differential dyeing of such polyamide fibres and materials containing polyamide fibres as are made of components which differ in dyeability, or mixtures of polyamide fibres, with dyes or dye mixtures, which process

comprises using for dyeing these materials an aqueous liquor which contains a dye of the formula

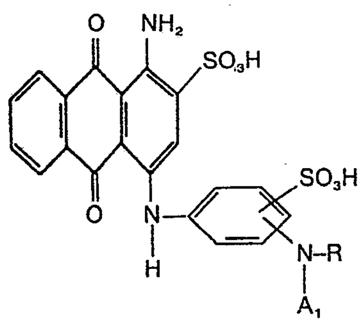

(1)

in which $A_1$ is hydrogen or $C_{1-4}$-alkyl and R is a $C_{2-5}$-alkanoyl, $C_{3-6}$-alkenoyl, phenoxycarbonyl, $C_{1-4}$-alkylsulfonyl or phenylsulfonyl radical, each of which radicals may be substituted in the alkyl, alkenyl, phenoxy or phenyl moiety, or a mixture of a dye of the formula (1) with a monosulfocontaining anthraquinone dye.

2. A process according to claim 1, which comprises the use of a dye of the formula (1) in which R is acetyl, chloroacetyl, propionyl, β-chloropropionyl, β-bromopropionyl, acryloyl, phenoxycarbonyl, methylsulfonyl, phenylsulfonyl or methylphenylsulfonyl.

3. A process according to claim 1, which comprises the use of a mixture of a dye of the formula (1) with a dye of the formula

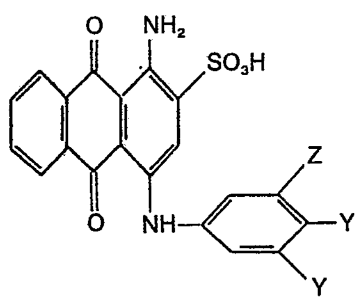

(2)

in which one Y is hydrogen or methyl and the other Y is $C_{2-4}$-alkanoylamino or $C_{2-4}$-hydroxyalkylsulfamoyl, and Z is hydrogen or methyl.

4. A process according to claim 3, which comprises the use of a mixture of dyes of the formulae (1) and (2) in a ratio of 99:1 to 70:30 or, in particular, in a ratio of 90:10 to 80:20.

5. A process according to claim 2, which comprises the use of a dye of the formula

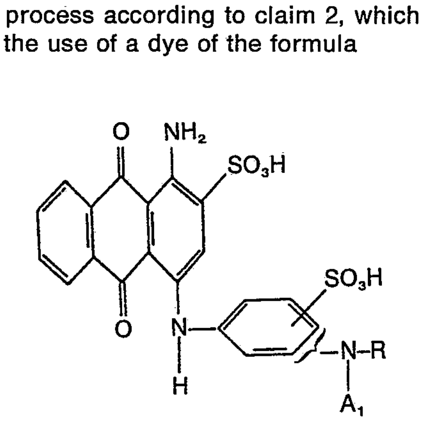

(3)

in which $A_1$ is hydrogen, methyl or ethyl and R is as defined in claim 2.

6. A process according to claim 5, which comprises the use of a dye of the formula

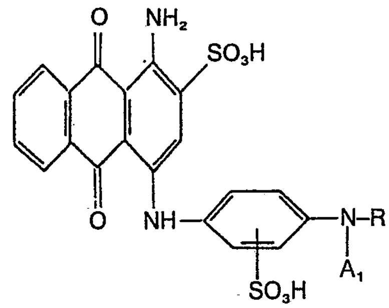

(4)

in which $A_1$ is hydrogen or methyl and R is as defined in claim 5.

7. A process according to claim 6, which comprises the use of a dye of the formula (4) in which R is acetyl, chloroacetyl, propionyl, β-chloropropionyl, β-bromopropionyl, acryloyl, methylsulfonyl, phenylsulfonyl or p-methylphenylsulfonyl.

8. A process according to claim 4, which comprises the use of a mixture of dyes of the formulae

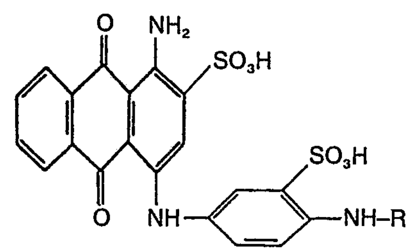

(5)

and

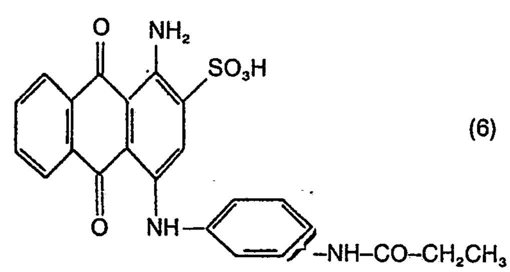

(6)

in which formula (5) R is acetyl, p-methylphenylsulfonyl or phenylsulfonyl.

9. A process according to claim 1, which comprises the use of a dye of the formula (1) in which $A_1$ is hydrogen.

10. A process according to claim 1, which comprises the use of a dye of the formula (1) in which R is a $C_{1-4}$-alkylsulfonyl radical or a phenylsulfonyl radical which may be substituted in the phenyl moiety.

11. A process according to claim 7, which comprises the use of a dye of the formula (4) in which $A_1$ is hydrogen and R is phenylsulfonyl or p-methylphenylsulfonyl.

12. A process according to claim 1, which comprises the use of a dye of the formula (1) or a

mixture of a dye of the formula (1) with a monosulfo-containing anthraquinone dye together with acid dyes suitable for normal polyamide fibres.

13. A process according to claim 12, wherein the suitable acid dyes are at least one yellow dye and/or at least one red dye.

14. A process according to claim 13, wherein the yellow dye is at least one dye of the formula

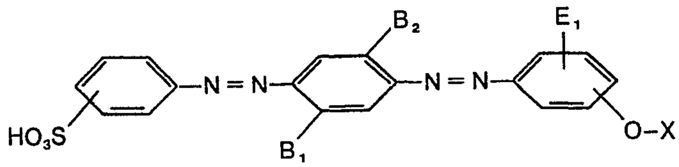

(7)

in which $B_1$, $B_2$ and $E_1$ are hydrogen, $C_{1-4}$-alkyl or $C_{1-4}$-alkoxy and X is straight chain or branched $C_{1-4}$-alkyl or straight chain or branched $C_{2-4}$-hydroxyalkyl.

15. A process according to claim 13, wherein the red dye is at least one dye of the formula

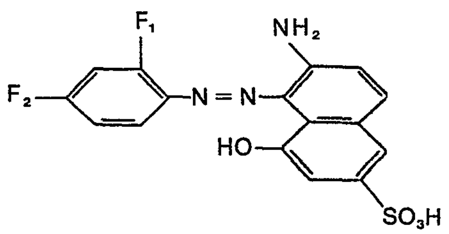

(8)

in which $F_1$ is hydrogen, substituted or unsubstituted $C_{1-4}$-alkyl,

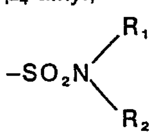 , 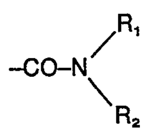

or $-SO_2R_3$ in which $R_1$ is $C_{1-4}$-alkyl, $R_2$ is substituted or unsubstituted $C_{5-7}$-cycloalkyl or substituted or unsubstituted phenyl and $R_3$ is substituted or unsubstituted phenyl or substituted or unsubstituted phenoxy, and $F_2$ is hydrogen, halogen, $C_{2-4}$-alkanoylamino, $C_{5-8}$-cycloalkoxycarbonylamino, $C_{1-4}$-alkoxycarbonylamino, $C_{1-4}$-alkylsulfonylamino or substituted or unsubstituted phenylsulfonylamino.

16. A process according to claim 15, which comprises the use of at least one red dye of the formula (8) in which $F_1$ is trifluoromethyl, N-methyl-N-cyclohexylsulfamoyl or N-ethyl-N-phenylsulfamoyl and $F_2$ is hydrogen, chlorine or acetylamino.

17. A process according to claim 13, wherein the suitable acid dyes are at least one dye of the formula

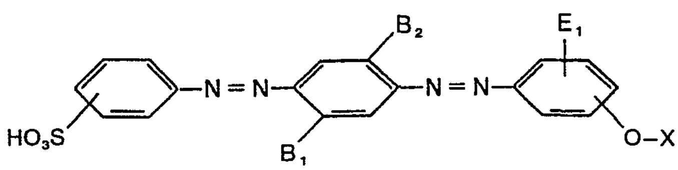

(7)

in which $B_1$, $B_2$ and $E_1$ are hydrogen, $C_{1-4}$-alkyl or $C_{1-4}$-alkoxy and X is straight chain or branched $C_{1-4}$-alkyl or straight chain or branched $C_{2-4}$-hydroxyalkyl and at least one dye of the formula

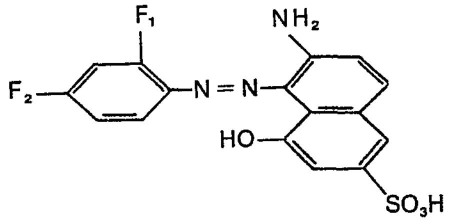

(8)

in which $F_1$ is trifluoromethyl, N-methyl-N-cyclohexylsulfamoyl or N-ethyl-N-phenylsulfamoyl and $F_2$ is hydrogen, chlorine or acetylamino.

18. A process according to claim 12, which comprises the use of a dye of the formula

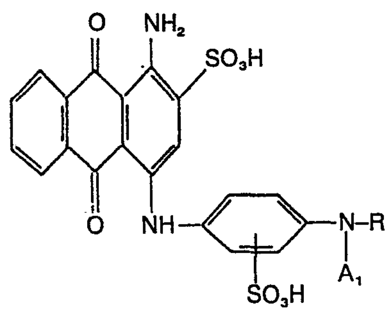

(4)

in which $A_1$ is hydrogen or methyl and R is acetyl, chloroacetyl, propionyl, β-chloropropionyl, β-bromopropionyl, acryloyl, methylsulfonyl, phenylsulfonyl or p-methylphenylsulfonyl, or a mixture of a dye of the formula (4) in which $A_1$ is hydrogen and R is acetyl or phenylsulfonyl, with a dye of the formula

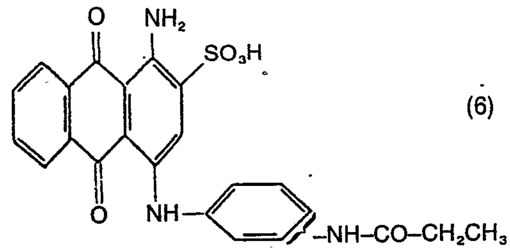

(6)

together with the dye of the formula

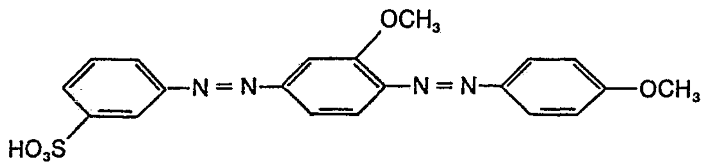

(9)

and the dye of the formula

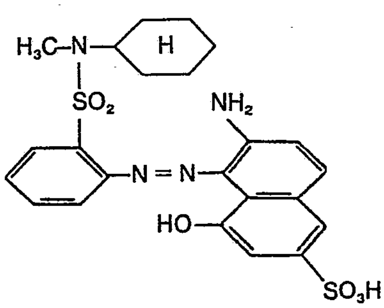

(10)

19. A process according to any one of claims 1 to 18, wherein dyeing is carried out at a temperature in the range from 50 to 100 °C, in particular form 70 to 96 °C.

20. The material, in particular textile material, dyed by the process of claim 1.

21. Dyed polyamide carpet material according to claim 20.

22. A process for the preparation of a dye of the formula

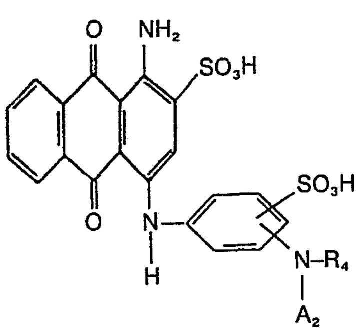

(11)

in which $A_2$ is hydrogen or $C_{1-4}$-alkyl and $R_4$ is a $C_{1-4}$-alkylsulfonyl radical or a phenylsulfonyl radical which may be substituted in the phenyl moiety by $C_{1-4}$-alkyl, which process comprises acylating a compound of the formula

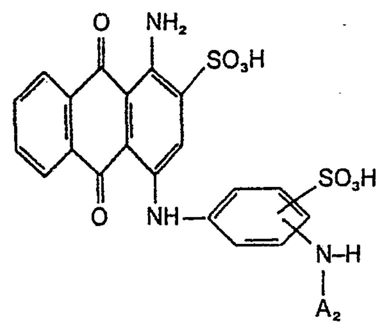

(14)

in which $A_2$ is as defined for formula (11), with a compound which introduces the radical $R_4$.

23. A process according to claim 22, which comprises starting from a compound of the formula (14) in which $A_2$ is hydrogen.

24. A process according to claim 22, which comprises effecting the acylation with a compound which introduces the radical $R_4$, in which compound $R_4$ is phenylsulfonyl or methylphenylsulfonyl.

25. A process according to claim 24, which comprises reacting
1-amino-4-(3′-sulfo-4′-aminophenylamino)-anthraquinone-2-sulfonic acid
with phenylsulfonyl chloride.

26. A process according to claim 24, which comprises reacting
1-amino-4-(2′-sulfo-4′-aminophenylamino)-anthraquinone-2-sulfonic acid
with phenylsulfonyl chloride.

27. A process for dyeing or printing, which comprises the use of a dye prepared according to claim 22.

28. A process according to claim 27 for dyeing synthetic and natural polyamide fibres.

**Revendications pour les États Contractants: BE, CH, DE, FR, GB, IT, LI NL**

1. Procédé pour la teinture différentielle de fibres de polyamide et de matériaux contenant des fibres de polyamide, constitués de composants pouvant être teints par teinture différentielle, ou

de mélanges de fibres de polyamide, avec des colorants ou des mélanges de colorants, caractérisé par le fait que l'on utilise pour la teinture de ces matériaux un bain aqueux qui contient un colorant de formule

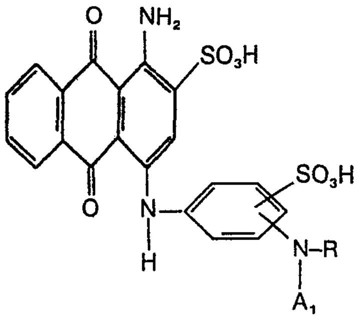

(1),

dans laquelle $A_1$ est un atome d'hydrogène ou un groupe alkyle en $C_{1-4}$, et R représente un reste alcanoyle en $C_{2-5}$, alcénoyle en $C_{3-6}$, phénoxycarbonyle, alkyl($C_{1-4}$)-sulfonyle ou phénylsulfonyle, qui peut être substitué dans le fragment alkyle, alcényle, phénoxy ou phényle, ou un mélange d'un colorant anthraquinonique contenant un seul groupe sulfo.

2. Procédé selon la revendication 1, caractérisé par le fait que l'on utilise un colorant de formule (1), dans lequel R est un reste acétyle, chloracétyle, propionyle, β-chloro- ou β-bromopropionyle, acryloyle, phénoxycarbonyle, méthylsulfonyle, phénylsulfonyle ou méthylphénylsulfonyle.

3. Procédé selon la revendication 1, caractérisé par le fait que l'on utilise un mélange d'un colorant de formule (1) avec un colorant de formule

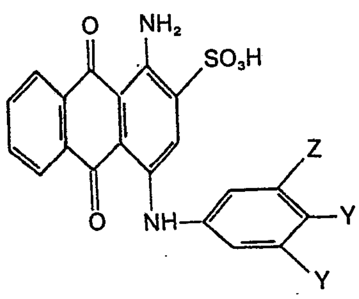

(2),

dans lequel un des radicaux Y est un atome d'hydrogène ou le groupe méthyle, et l'autre radical Y est un reste alcanoyl($C_{2-4}$)-amino ou hydroxyalkyl($C_{2-4}$)-sulfamyle et Z est un atome d'hydrogène ou le groupe méthyle.

4. Procédé selon la revendication 3, caractérisé par le fait que l'on utilise un mélange des colorants de formules (1) et (2) en proportions de 99:1 à 70:30, et en particulier en proportions de 90:10 à 80:20.

5. Procédé selon la revendication 2, caractérisé par le fait que l'on utilise un colorant de formule

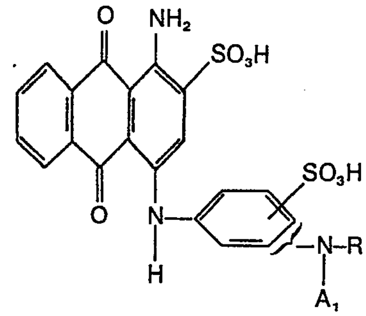

(3),

dans laquelle $A_1$ est un atome d'hydrogène ou le groupe méthyle ou éthyle, et R a la signification donnée dans la revendication 2.

6. Procédé selon la revendication 5, caractérisé par le fait que l'on utilise un colorant de formule

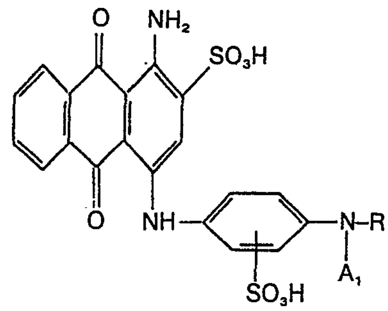

(4),

dans laquelle $A_1$ est un atome d'hydrogène ou le groupe méthyle, et R a la signification donnée dans la revendication 5.

7. Procédé selon la revendication 6, caractérisé par le fait que l'on utilise un colorant de formule 4, dans lequel R est un reste acétyle, chloracétyle, propionyle, β-chloro- ou β-bromopropionyle, acryloyle, méthylsulfonyle, phénylsulfonyle ou p-méthylphénylsulfonyle.

8. Procédé selon la revendication 4, caractérisé par le fait que l'on utilise un mélange des colorants de formules

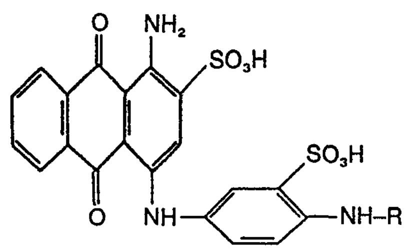

(5)

et

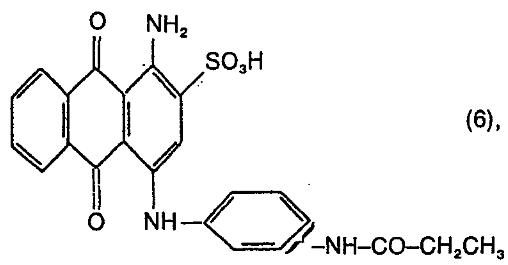

(6),

où, dans la formule (5), R est un reste acétyle, p-méthylphénylsulfonyle ou phénylsulfonyle.

9. Procédé selon la revendication 1, caractérisé par le fait que l'on utilise un colorant de formule (1), dans lequel $A_1$ est un atome d'hydrogène.

10. Procédé selon la revendication 1, caractérisé par le fait que l'on utilise un colorant de formule (1), dans lequel R représente un reste alkyl($C_{1-4}$)-sulfonyle ou un reste phénylsulfonyle qui peut être substitué dans le fragment phényle.

11. Procédé selon la revendication 7, caractérisé par le fait que l'on utilise un colorant de formule (4), dans lequel $A_1$ est un atome d'hydrogène et R est un reste phénylsulfonyle ou p-méthylphénylsulfonyle.

12. Procédé selon la revendication 1, caractérisé par le fait que l'on utilise un colorant de formule (1) ou un mélange d'un colorant de formule (1) avec un colorant anthraquinonique contenant un seul groupe sulfo, conjointement avec des colorants acides appropriés pour des fibres de polyamide normales.

13. Procédé selon la revendication 12, caractérisé par le fait que l'on utilise en tant que colorants acides appropriés au moins un colorant jaune et/ou au moins un colorant rouge.

14. Procédé selon la revendication 13, caractérisé par le fait que l'on utilise en tant que colorant jaune au moins un colorant de formule

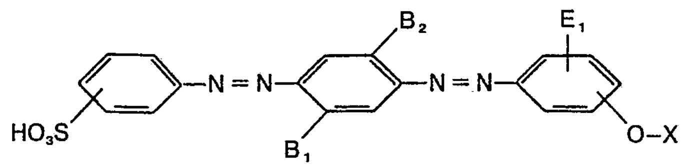

(7),

dans laquelle $B_1$, $B_2$ et $E_1$ représentent un atome d'hydrogène ou un groupe alkyle en $C_{1-4}$ ou alcoxy en $C_{1-4}$, et X représente un groupe alkyle en $C_{1-4}$ à chaîne droite ou ramifiée, ou un groupe hydroxyalkyle en $C_{2-4}$ à chaîne droite ou ramifiée.

15. Procédé selon la revendication 13, caractérisé par le fait que l'on utilise en tant que colorant rouge au moins un colorant de formule

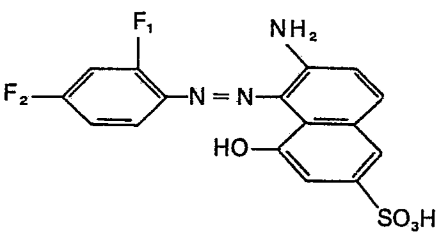

(8),

dans laquelle $F_1$ représente un atome d'hydrogène ou un radical alkyle en $C_{1-4}$ éventuellement substitué,

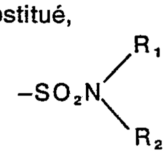

,

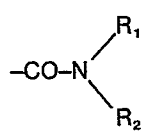

ou $-SO_2R_3$, $R_1$ étant un groupe alkyle en $C_{1-4}$, $R_2$ étant un groupe cycloalkyle en $C_{5-7}$ éventuellement substitué ou un groupe phényle éventuellement substitué, et $R_3$ étant un groupe phényle éventuellement substitué ou un groupe phénoxy éventuellement substitué, et $F_2$ représente un atome d'hydrogène ou d'halogène, ou un radical alcanoyl($C_{2-4}$)-amino, cycloalcoxy($C_{5-8}$)-carbonylamino, alcoxy($C_{1-4}$)-carbonylamino, alkyl($C_{1-4}$)-sulfonylamino ou un radical phénylsulfonylamino éventuellement substitué.

16. Procédé selon la revendication 15, caractérisé par le fait que l'on utilise au moins un colorant rouge de formule (8), dans lequel $F_1$ est un radical trifluorométhyle, N-méthyl-N-cyclohexylsulfamyle ou N-éthyl-N-phénylsulfamyle, et $F_2$ est un atome d'hydrogène ou de chlore ou le radical acétylamino.

17. Procédé selon la revendication 13, caractérisé par le fait que l'on utilise en tant que colorants acides appropriés au moins un colorant de formule

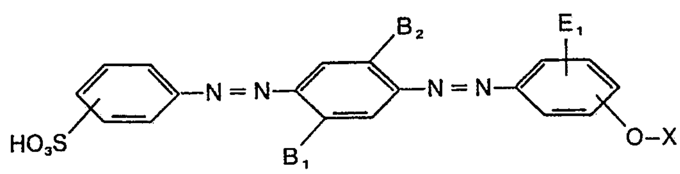

(7),

dans laquelle $B_1$, $B_2$ et $E_1$ représentent un atome d'hydrogène ou un groupe alkyle en $C_{1-4}$ ou alcoxy en $C_{1-4}$, et X représente un groupe alkyle en $C_{1-4}$ à chaîne droite ou ramifiée ou un groupe hydroxyalkyle en $C_{2-4}$ à chaîne droite ou ramifiée, et au moins un colorant de formule

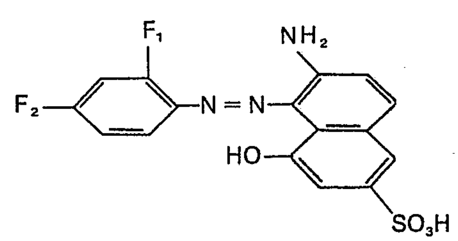

(8),

dans laquelle $F_1$ est un groupe trifluorométhyle, N-méthyl-N-cyclohexylsulfamyle ou N-éthyl-N-phénylsulfamyle, et $F_2$ est un atome d'hydrogène ou de chlore ou le groupe acétylamino.

18. Procédé selon la revendication 12, caractérisé par le fait que l'on utilise un colorant de formule

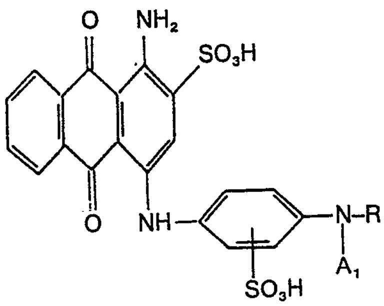

(4),

dans laquelle $A_1$ représente un atome d'hydrogène ou le groupe méthyle et R représente un reste acétyle, chloracétyle, propionyle, β-chloro- ou β-bromopropionyle, acryloyle, méthylsulfonyle, phénylsulfonyle ou p-méthylphénylsulfonyle, ou un mélange d'un colorant de formule (4), dans lequel $A_1$ représente un atome d'hydrogène et R représente le reste acétyle ou phénylsulfonyle, avec un colorant de formule

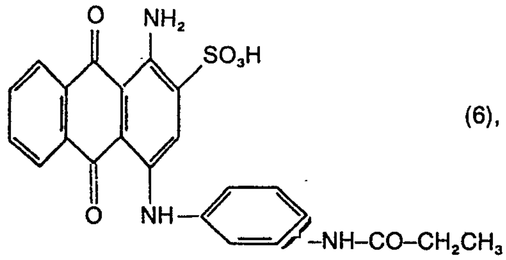

(6),

conjointement avec le colorant de formule

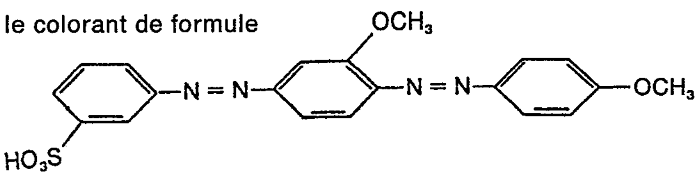

(9)

et le colorant de formule

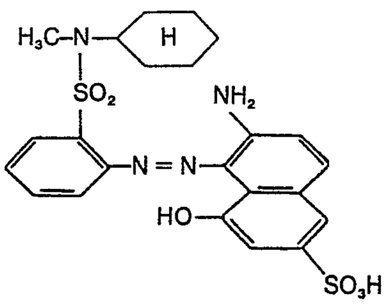

(10),

19. Procédé selon l'une des revendications 1 à 18, caractérisé par le fait que l'on effectue la teinture à une température comprise entre 50 et 100 °C, en particulier de 70 à 96 °C.

20. Le matériau, en particulier le matériau textile, teint par le procédé selon la revendication 1.

21. Le matériau pour tapis en polyamide, teint selon la revendication 20.

22. Colorants de formule

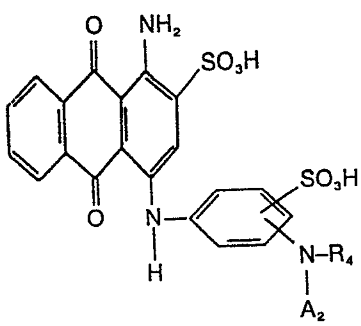

(11),

dans laquelle $A_2$ représente un atome d'hydrogène ou un groupe alkyle en $C_{1-4}$, et $R_4$ représente un reste alkyl($C_{1-4}$)-sulfonyle ou un reste phénylsulfonyle qui peut être substitué dans le fragment phényle par un groupe alkyle en $C_{1-4}$.

23. Colorants selon la revendication 22, dans lesquels $A_2$ est un atome d'hydrogène.

24. Colorants selon la revendication 22, dans lesquels $R_4$ est le reste phénylsulfonyle ou méthylphénylsulfonyle.

25. Colorant selon la revendication 24, de formule

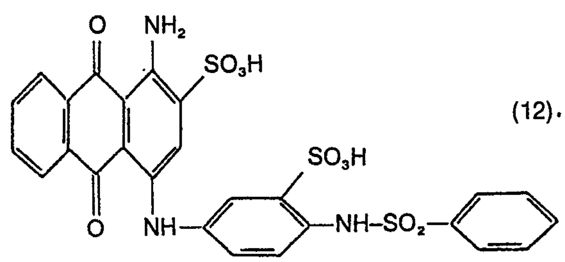

(12).

26. Colorant selon la revendication 24, de formule

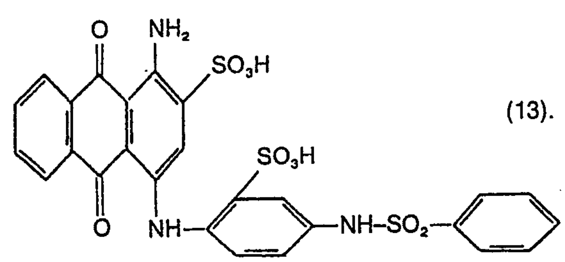

(13).

27. Procédé pour la préparation des colorants selon la revendication 22, caractérisé par le fait que l'on effectue l'acylation d'un composé de formule

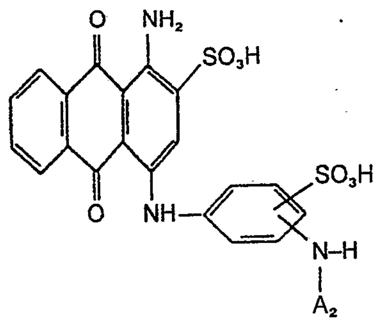

(14),

dans laquelle $A_2$ a la signification donnée pour la formule (11), avec un composé introduisant le reste $R_4$.

28. Procédé selon la revendication 27, caractérisé par le fait que l'on part d'un composé de formule (14) dans lequel $A_2$ est un atome d'hydrogène.

29. Procédé selon la revendication 27, caractérisé par le fait que l'on effectue l'acylation avec un composé introduisant le reste $R_4$, dans lequel $R_4$ est le radical phénylsulfonyle ou méthylphénylsulfonyle.

30. Procédé selon la revendication 29, caractérisé par le fait que l'on fait réagir l'acide 1-amino-4-(3'-sulfo-4'-aminophénylamino)-anthraquinone-2-sulfonique avec le chlorure de phénylsulfonyle.

31. Procédé selon la revendication 29, caractérisé par le que l'on fait réagir l'acide 1-amino-4-(2'-sulfo-4'-aminophénylamino)-anthraquinone-2-sulfonique avec le chlorure de phénylsulfonyle.

32. Procédé pour la teinture et l'impression avec utilisation des colorants préparés selon la revendication 27.

33. Procédé selon la revendication 32, pour la teinture de fibres de polyamidessynthétiques et de fibres de polyamides naturels.

**Revendications pour l'État Contractant AT**

1. Procédé pour la teinture différentielle de fibres de polyamide et de matériaux contenant des fibres de polyamide, constitués de composants pouvant être teints par teinture différentielle, ou de mélanges de fibres de polyamide, avec des colorants ou des mélanges de colorants, caractérisé par le fait que l'on utilise pour la teinture de ces matériaux un bain aqueux qui contient un colorant de formule

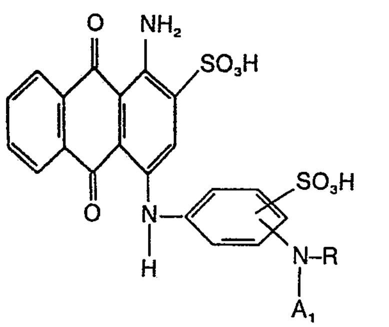

(1),

dans laquelle $A_1$ est un atome d'hydrogène ou un groupe alkyle en $C_{1-4}$, et R représente un reste alcanoyle en $C_{2-5}$, alcénoyle en $C_{3-6}$, phénoxycarbonyle, alkyl($C_{1-4}$)-sulfonyle ou phénylsulfonyle, qui peut être substitué dans le fragment alkyle, alcényle, phénoxy ou phényle, ou un mélange d'un colorant de formule (1) et d'un colorant anthraquinonique contenant un seul groupe sulfo.

2. Procédé selon la revendication 1, caractérisé par le fait que l'on utilise un colorant de formule (1), dans lequel R est un reste acétyle, chloracétyle, propionyle, β-chloro- ou β-bromopropionyle, acryloyle, phénoxycarbonyle, méthylsulfonyle, phénylsulfonyle ou méthylphénylsulfonyle.

3. Procédé selon la revendication 1, caractérisé par le fait que l'on utilise un mélange d'un colorant de formule (1) avec un colorant de formule

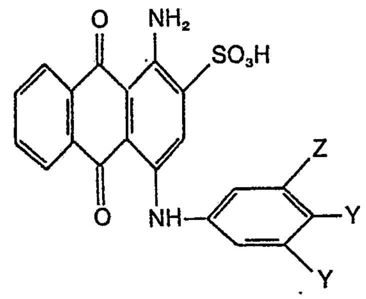

(2),

dans lequel un des radicaux Y est un atome d'hydrogène ou le groupe méthyle, et l'autre radical Y est un reste alcanoyl($C_{2-4}$)-amino ou hydroxyalkyl($C_{2-4}$)-sulfamyle et Z est un atome d'hydrogène ou le groupe méthyle.

4. Procédé selon la revendication 3, caractérisé par le fait que l'on utilise un mélange des colorants de formules (1) et (2) en proportions de 99:1 à 70:30, et en particulier en proportions de 90:10 à 80:20.

5. Procédé selon la revendication 2, caractérisé par le fait que l'on utilise un colorant de formule

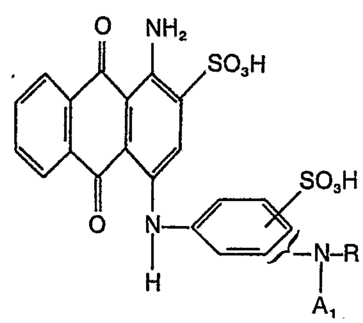

(3),

dans laquelle $A_1$ est un atome d'hydrogène ou le groupe méthyle ou éthyle, et R a la signification donnée dans la revendication 2.

6. Procédé selon la revendication 5, caractérisé par le fait que l'on utilise un colorant de formule

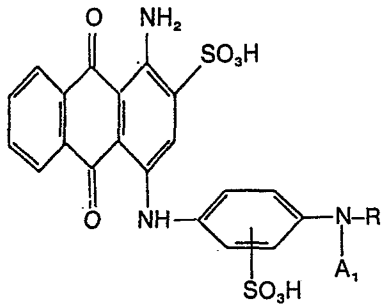

(4),

dans laquelle $A_1$ est un atome d'hydrogène ou le groupe méthyle, et R a la signification donnée dans la revendication 5.

7. Procédé selon la revendication 6, caractérisé par le fait que l'on utilise un colorant de formule 4, dans lequel R est un reste acétyle, chloracétyle, propionyle, β-chloro- ou β-bromopropionyle, acryloyle, méthylsulfonyle, phénylsulfonyle ou p-méthylphénylsulfonyle.

8. Procédé selon la revendication 4, caractérisé par le fait que l'on utilise un mélange des colorants de formules

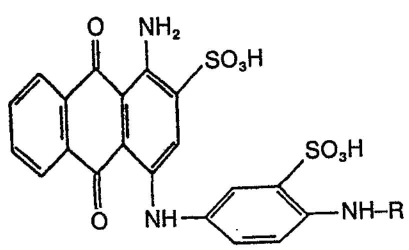

(5)

et

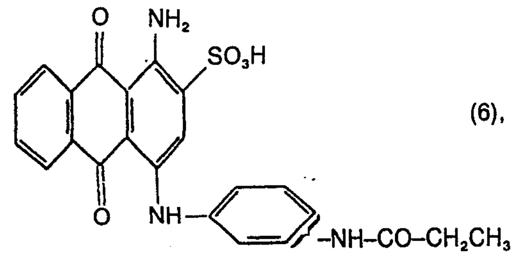

(6),

où, dans la formule (5), R est un reste acétyle, p-méthylphénylsulfonyle ou phénylsulfonyle.

9. Procédé selon la revendication 1, caractérisé par le fait que l'on utilise un colorant de formule (1), dans lequel $A_1$ est un atome d'hydrogène.

10. Procédé selon la revendication 1, caractérisé par le fait que l'on utilise un colorant de formule (1), dans lequel R représente un reste alkyl($C_{1-4}$)-sulfonyle ou un reste phénylsulfonyle qui peut être substitué dans le fragment phényle.

11. Procédé selon la revendication 7, caractérisé par le fait que l'on utilise un colorant de formule (4), dans lequel $A_1$ est un atome d'hydrogène et R est un reste phénylsulfonyle ou p-méthylphénylsulfonyle.

12. Procédé selon la revendication 1, caractérisé par le fait que l'on utilise un colorant de formule (1) ou un mélange d'un colorant de formule (1) avec un colorant anthraquinonique contenant un seul groupe sulfo, conjointement avec des colorants acides appropriés pour des fibres de polyamide normales.

13. Procédé selon la revendication 12, caractérisé par le fait que l'on utilise en tant que colorants acides appropriés au moins un colorant jaune et/ou au moins un colorant rouge.

14. Procédé selon la revendication 13, caractérisé par le fait que l'on utilise en tant que colorant jaune au moins un colorant de formule

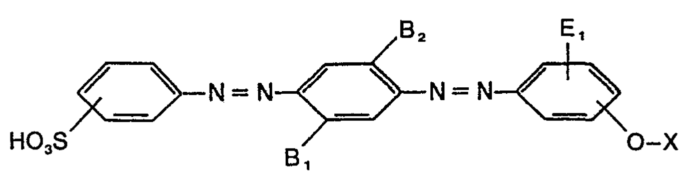

(7),

dans laquelle $B_1$, $B_2$ et $E_1$ représentent un atome d'hydrogène ou un groupe alkyle en $C_{1-4}$ ou alcoxy en $C_{1-4}$, et X représente un groupe alkyle en $C_{1-4}$ à chaîne droite ou ramifiée, ou un groupe hydroxyalkyle en $C_{2-4}$ à chaîne droite ou ramifiée.

15. Procédé selon la revendication 13, caractérisé par le fait que l'on utilise en tant que colorant rouge au moins un colorant de formule

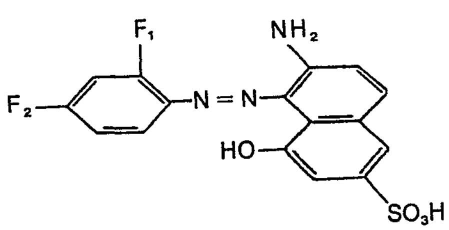

(8),

dans laquelle $F_1$ représente un atome d'hydrogène ou un radical alkyle en $C_{1-4}$ éventuellement substitué,

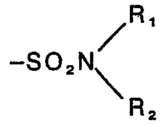 , 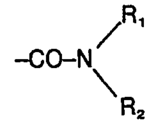

ou $-SO_2R_3$, $R_1$ étant un groupe alkyle en $C_{1-4}$, $R_2$ étant un groupe cycloalykle en $C_{5-7}$ éventuellement substitué ou un groupe phényle éventuellement substitué, et $R_3$ étant un groupe phényle éventuellement substitué ou un groupe phénoxy éventuellement substitué, et $F_2$ représente un atome d'hydrogène ou d'halogène, ou un radical alcanoyl($C_{2-4}$)-amino, cycloalcoxy($C_{5-8}$)-carbonyl-

amino, alcoxy($C_{1-4}$)-carbonylamino, alkyl($C_{1-4}$)-sulfonylamino ou un radical phénylsulfonylamino éventuellement substitué.

16. Procédé selon la revendication 15, caractérisé par le fait que l'on utilise au moins un colorant rouge de formule (8), dans lequel $F_1$ est un radical trifluorométhyle, N-méthyl-N-cyclohexylsulfamyle ou N-éthyl-N-phénylsulfamyle, et $F_2$ est un atome d'hydrogène ou de chlor ou le radical acétylamino.

17. Procédé selon la revendication 13, caractérisé par le fait que l'on utilise en tant que colorants acides appropriés au moins un colorant de formule

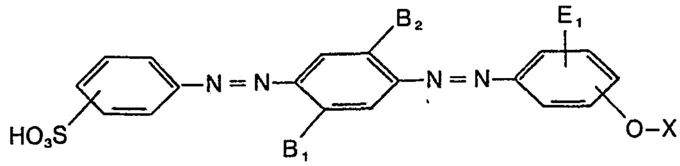

(7),

dans laquelle $B_1$, $B_2$ et $E_1$ représentent un atome d'hydrogène ou un groupe alkyle en $C_{1-4}$ ou alcoxy en $C_{1-4}$, et X représente un groupe alkyle en $C_{1-4}$ à chaîne droite ou ramifiée ou un groupe hydroxyalkyle en $C_{2-4}$ à chaîne droite ou ramifiée, et au moins un colorant de formule

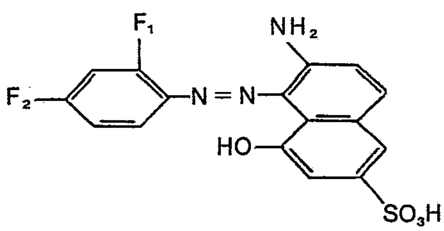

(8),

dans laquelle $F_1$ est un groupe trifluorométhyle, N-méthyl-N-cyclohexylsulfamyle ou N-éthyl-N-phénylsulfamyle; et $F_2$ est un atome d'hydrogène ou de chlor ou le groupe acétylamino.

18. Procédé selon la revendication 12, caractérisé par le fait que l'on utilise un colorant de formule

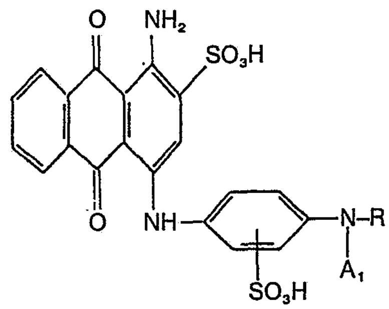

(4),

dans laquelle $A_1$ représente un atome d'hydrogène ou le groupe méthyle, et R représente un reste acétyle, chloracétyle, propionyle, β-chloro- ou β-bromopropionyle, acryloyle, méthylsulfonyle, phénylsulfonyle ou p-méthylphénylsulfonyle, ou un mélange d'un colorant de formule (4), dans lequel $A_1$ représente un atome d'hydrogène et R représente le reste acétyle ou phénylsulfonyle, avec un colorant de formule

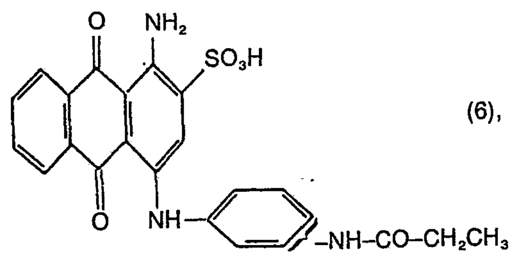

(6),

conjointement avec le colorant de formule

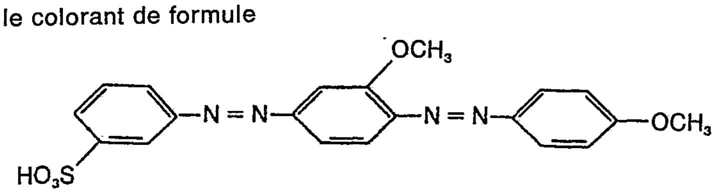

(9)

et le colorant de formule

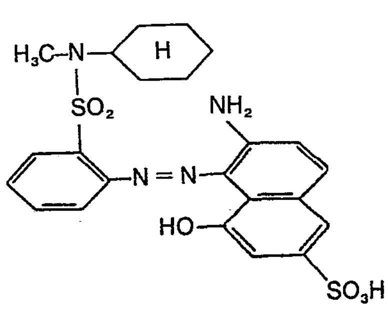

(10).

19. Procédé selon l'une des revendications 1 à 18, caractérisé par le fait que l'on effectue la teinture à une température comprise entre 50 et 100 °C, en particulier de 70 à 96 °C.

20. Le matériau, en particulier le matériau textile, teint par le procédé selon la revendication 1.

21. Le matériau pour tapis en polyamide, teint selon la revendication 20.

22. Procédé pour la préparation des colorants de formule

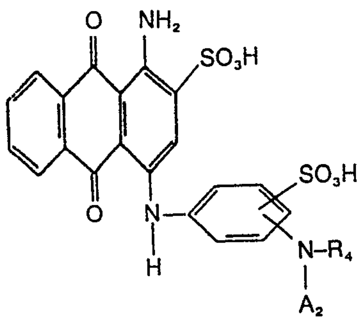

(11),

dans laquelle $A_2$ représente un atome d'hydrogène ou un groupe alkyle en $C_{1-4}$, et $R_4$ représente un reste alkyl($C_{1-4}$)-sulfonyle ou un reste phénylsulfonyle qui peut être substitué dans le fragment phényle par un groupe alkyle en $C_{1-4}$, caractérisé par le fait que l'on effectue l'acylation d'un composé de formule

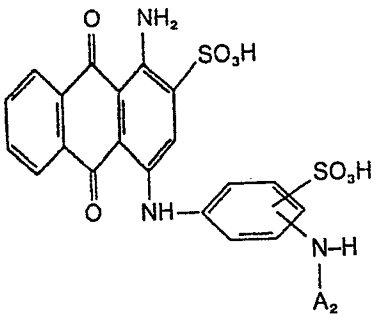

(14),

dans laquelle $A_2$ a la signification donnée dans la formule 11, avec un composé introduisant le reste $R_4$.

23. Procédé selon la revendicatin 22, caractérisé par le fait que l'on part d'un composé de formule (14), dans lequel $A_2$ est un atome d'hydrogène.

24. Procédé selon la revendication 22, caractérisé par le fait que l'on effectue l'acylation avec un composé introduisant le reste $R_4$, dans lequel $R_4$ est le reste phénylsulfonyle ou méthylphénylsulfonyle.

25. Procédé selon la revendication 24, caractérisé par le fait que l'on fait réagir l'acide
1-amino-4-(3'-sulfo-4'-aminophénylamino)-
anthraquinone-2-sulfonique
avec le chlorure de phénylsulfonyle.

26. Procédé selon la revendication 24, caractérisé par le fait que l'on fait réagir l'acide
1-amino-4-(2'-sulfo-4'-aminophénylamino)-
anthraquinone-2-sulfonique
avec le chlorure de phénylsulfonyle.

27. Procédé pour la teinture et l'impression avec utilisation des colorants préparés selon la revendication 22.

28. Procédé selon la revendication 27, pour la teinture de fibres de polyamides synthétiques et de fibres de polyamides naturels.